# EUROPEAN PATENT APPLICATION

(11) **EP 3 125 345 A1**
(43) Date of publication of application: **01.02.2017**
(21) Application number: 15769407.6
(22) Date of filing: 25.03.2015
(51) Int. Cl.: H01M 8/02, H01M 4/88, H01M 8/10

(54) **METHOD FOR MANUFACTURING MEMBRANE ELECTRODE ASSEMBLY, MEMBRANE ELECTRODE ASSEMBLY, AND SOLID POLYMER FUEL CELL**

(30) Priority: 25.03.2014 JP 2014062550; 25.03.2014 JP 2014062551
(71) Applicant: Toppan Printing Co., Ltd., Tokyo 110-0016 (JP)
(72) Inventor: MINEGISHI, Takayuki, Tokyo 110-0016 (JP)
(74) Representative: Hoffmann Eitle
(86) International application number: PCT/JP2015/059237
(87) International publication number: WO 2015/147098

(57) **Abstract**

A method for producing a membrane electrode assembly includes: a first step of disposing a transfer member including a gasket layer on an upper surface of a support base material; a second step of forming an electrode catalyst layer by coating an ink onto a portion of the upper surface of the support base material, exposed from the transfer member to form a layered body having the support base material, the transfer member, and the electrode catalyst layer; and a third step of pressing the layered body against a polymer electrolyte membrane having a contact surface to compression bond the gasket layer and the electrode catalyst layer to the contact surface.

## Description

### [Technical Field]

The present invention relates to a method for producing a membrane electrode assembly, a membrane electrode assembly, and a polymer electrolyte fuel cell provided with a membrane electrode assembly.

### [Background Art]

Polymer electrolyte fuel cells use a polymer membrane having proton conductivity as an electrolyte as described in PTL 1, for example. Fig. 22 is a cross-sectional view illustrating an example of a structure of a polymer electrolyte fuel cell.

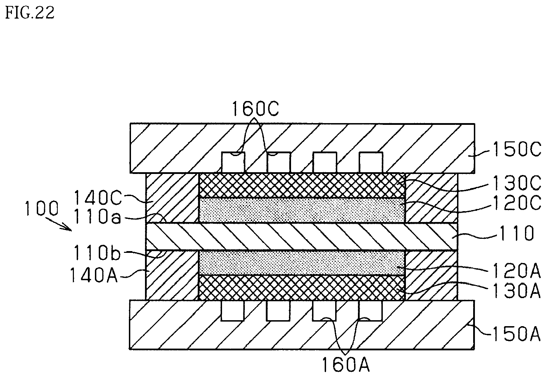

As shown in Fig. 22, a polymer electrolyte membrane 110 has a cathode contact surface 110a, which is one side surface, and an anode contact surface 110b, which is a side surface on the opposite side of the cathode contact surface 110a. The cathode contact surface 110a is in contact with an electrode catalyst layer 120C. The electrode catalyst layer 120C and a porous diffusion layer 130C are laminated in this order. The anode contact surface 110b is in contact with an electrode catalyst layer 120A. The electrode catalyst layer 120A and a porous diffusion layer 130A are laminated in this order. The electrode catalyst layer 120C configures an air electrode serving as a cathode. The electrode catalyst layer 120A configures a fuel electrode serving as an anode.

On the cathode contact surface 110a, a gasket layer 140C is disposed outside the outer perimeters of the electrode catalyst layer 120C and the porous diffusion layer 130C. On the anode contact surface 110b, a gasket layer 140A is disposed outside the outer perimeters of the electrode catalyst layer 120A and the porous diffusion layer 130A. A membrane electrode assembly 100 is formed of the polymer electrolyte membrane 110, the electrode catalyst layers 120C and 120A, the porous diffusion layers 130C and 130A, and the gasket layers 140C and 140A. A pair of separators 150C and 150A sandwich the membrane electrode assembly 100.

To the cathode side electrode catalyst layer 120C, an oxidizer gas containing oxygen is supplied from a gas passage 160C formed in the separator 150C. To the anode side electrode catalyst layer 120A, a fuel gas containing hydrogen is supplied from a gas passage 160A formed in the separator 150A. When an electrode reaction is promoted between the oxidizer gas and the fuel gas in the presence of a catalyst, an electromotive force is generated between the cathode and the anode. In the meantime, the gasket layers 140C and 140A prevent the gases supplied to the electrode catalyst layers 120C and 120A from leaking out of the polymer electrolyte fuel cell.

### [Citation List]

### [Patent Literature]

Patent Literature 1: JP-A-2012-74331

### [Summary of the Invention]

### [Technical Problem]

In the fabrication process of the membrane electrode assembly 100, first, the electrode catalyst layers 120C and 120A are laminated on the respective contact surfaces 110a and 110b. Then, the gasket layers 140C and 140A are bonded to the perimeter portions of the respective contact surfaces 110a and 110b. Then, the porous diffusion layers 130C and 130A are laminated on the respective electrode catalyst layers 120C and 120A.

It is difficult to precisely determine the sizes of the gasket layers 140C and 140A in conformity with the sizes of the electrode catalyst layers 120C and 120A, respectively, in advance. Therefore, a gap may be formed between the electrode catalyst layer 120C and the gasket layer 140C or between the electrode catalyst layer 120A and the gasket layer 140A when bonding the gasket layers 140C and 140A to the polymer electrolyte membrane 110. A portion of the polymer electrolyte membrane 110 is exposed to the separator 150C through the gap between the electrode catalyst layer 120C and the gasket layer 140C, and thus is directly exposed to the oxidizer gas. A portion of the polymer electrolyte membrane 110 is also exposed to the separator 150A through the gap between the electrode catalyst layer 120A and the gasket layer 140A, and thus is directly exposed to the fuel gas. The exposed portions are in contact with neither the electrode catalyst layers 120C and 120A nor the gasket layers 140C and 140A. Thus, stress is concentrated on the exposed portions due to swelling or contraction of the polymer electrolyte membrane 110 in generating power. In this way, the exposed portions of the polymer electrolyte membrane 110 can create a factor of accelerating deterioration of the polymer electrolyte membrane 110.

The present invention has as its object to provide a method for producing a membrane electrode assembly that can prevent a polymer electrolyte membrane from being exposed from between an electrode catalyst layer and a gasket layer, and to provide a membrane electrode assembly and a polymer electrolyte fuel cell.

### [Solution to Problem]

A method for producing a membrane electrode assembly for solving the problem includes: a first step of disposing a transfer member including a gasket layer on an upper surface of a support base material; a second step of forming an electrode catalyst layer by coating an ink onto a portion of the upper surface of the support base material, the portion being exposed from the transfer member, to form a layered body including the support base material, the transfer member, and the electrode catalyst layer; and a third step of pressing the layered body against a polymer electrolyte membrane having a contact surface to compression bond the gasket layer and the electrode catalyst layer to the contact surface.

According to the production method mentioned above, in forming the electrode catalyst layer, the size of the gasket layer is brought into conformity with the size of the electrode catalyst layer, and the electrode catalyst layer and the gasket layer are simultaneously transferred to the contact surface of the polymer electrolyte membrane. Accordingly, the polymer electrolyte membrane is prevented from being exposed from a gap that could be formed between the electrode catalyst layer and the gasket layer.

In the production method, the transfer member may include the gasket layer and a transfer bonding layer; in the first step, the transfer member may be disposed so that the transfer bonding layer is located between the upper surface of the support base material and the gasket layer; and the method may further include a fourth step of peeling off the support base material and the transfer bonding layer from the gasket layer and the electrode catalyst layer compression bonded to the contact surface.

According to the production method, since the gasket layer is bonded to the support base material via the transfer bonding layer, the gasket layer is easily fixed to the support base material.

In the production method, the gasket layer may include a gasket base material and a gasket bonding layer; and the gasket base material may be sandwiched between the transfer bonding layer and the gasket bonding layer.

According to the production method, since the gasket base material is bonded to the polymer electrolyte membrane via the gasket bonding layer, adhesion of the gasket layer to the polymer electrolyte membrane is enhanced.

In the production method, the transfer bonding layer may have a greater adhesive strength to the support base material than to the gasket base material.

According to the production method, the transfer bonding layer can be easily peeled off from the gasket layer together with the support base material.

In the production method, the transfer member may be the gasket layer; the gasket layer may be a multi-layer disposed parallel to the upper surface of the support base material; and the multi-layer may include a first bonding layer for bonding the contact surface to the gasket layer, a second bonding layer for bonding the upper surface of the support base material to the gasket layer, and a gasket base material sandwiched between the first bonding layer and the second bonding layer and in contact with the first bonding layer and the second bonding layer.

According to the production method, since the gasket layer is bonded, via the bonding layer, to the members sandwiching the gasket layer, adhesion of the gasket layer to the members sandwiching the gasket layer is enhanced.

The production method may further include a fourth step of peeling off the support base material from the gasket layer and the electrode catalyst layer compression bonded to the contact surface, wherein, the second bonding layer may have a greater adhesive strength to the gasket base material than to the support base material.

According to the production method, the support base material can be easily peeled off from the gasket layer.

The production method may further include a fifth step of disposing a porous diffusion layer after peeling off of the support base material, wherein: in the fifth step, the porous diffusion layer may be compression bonded to the electrode catalyst layer and bonded to the second bonding layer of the gasket layer.

According to the production method, in fixing the porous diffusion layer, the second bonding layer disposed on the contact surface of the polymer electrolyte membrane is used as the gasket layer, together with the electrode catalyst layer. Accordingly, the porous diffusion layer can be held on the multi-layer including the polymer electrolyte membrane, the electrode catalyst layer, and the gasket layer, without the necessity of separately forming a bonding layer.

In the production method, the transfer member may be the gasket layer; and the gasket layer may include a bonding layer that is bonded to the contact surface and the upper surface of the support base material when the layered body is pressed against the polymer electrolyte membrane.

According to the production method, the number of components configuring the gasket layer can be reduced, compared with the case where a gasket layer includes a bonding layer and a gasket base material.

The production method may further include a fourth step of peeling off the support base material from the gasket layer and the electrode catalyst layer compression bonded to the contact surface, wherein, the bonding layer as the gasket layer may have a greater adhesive strength to the polymer electrolyte membrane than to the support base material.

According to the production method, the support base material can be easily peeled off from the gasket layer.

The production method may further include a fifth step of disposing a porous diffusion layer after peeling off of the support base material, wherein, in the step of disposing the porous diffusion layer, the porous diffusion layer may be compression bonded to the electrode catalyst layer and bonded to the bonding layer as the gasket layer.

According to the production method, in fixing the porous diffusion layer, the bonding layer disposed on the contact surface of the polymer electrolyte membrane is used as the gasket layer, together with the electrode catalyst layer. Accordingly, the porous diffusion layer can be held on the multi-layer including the polymer electrolyte membrane, the electrode catalyst layer, and the gasket layer, without the necessity of separately forming the bonding layer.

In the production method, the support base material may include a porous body; and in the third step, the layered body may be pressed against the polymer electrolyte membrane to form a porous diffusion layer from the porous body.

According to the production method, the support base material is used as the porous diffusion layer. Thus, the number of members needed to form the membrane electrode assembly can be reduced, and the number of fabrication steps of the membrane electrode assembly can be reduced, compared with a production method in which a support base material is peeled off after a gasket layer and an electrode catalyst layer are transferred from the support base material to the polymer electrolyte membrane, and a porous diffusion layer is separately disposed.

A membrane electrode assembly for solving the problem includes: a polymer electrolyte membrane having a contact surface; an electrode catalyst layer located on the contact surface; and a gasket layer located on the contact surface so as to surround the electrode catalyst layer, wherein: the gasket layer includes a bonding layer; and the bonding layer has an inner perimeter partially extruding into an outer perimeter of the electrode catalyst layer.

The membrane electrode assembly having the configuration mentioned above is produced using the production method described above. Accordingly, in the membrane electrode assembly, the polymer electrolyte membrane is prevented from being exposed from between the electrode catalyst layer and the gasket layer.

In the configuration, the gasket layer may include a gasket base material and a gasket bonding layer as the bonding layer; and the gasket bonding layer may be sandwiched between the gasket base material and the polymer electrolyte membrane.

According to the configuration, since the gasket base material is bonded to the polymer electrolyte membrane via the gasket bonding layer, adhesion of the gasket layer to the polymer electrolyte membrane is enhanced.

In the configuration, the membrane electrode assembly may further include a porous diffusion layer, wherein: the electrode catalyst layer may be located between the polymer electrolyte membrane and the porous diffusion layer; and the gasket layer may be located on the contact surface so as to surround the electrode catalyst layer and the porous diffusion layer.

According to the configuration, in the membrane electrode assembly including the porous diffusion layer, the polymer electrolyte membrane is prevented from being exposed from between the electrode catalyst layer and the gasket layer.

In the configuration, the gasket layer may be a first gasket layer; the membrane electrode assembly may further include: a porous diffusion layer including a small width portion in surface contact with the electrode catalyst layer, and a large width portion having a width greater than a width of the small width portion in a direction parallel to the contact surface, with the small width portion being located between the electrode catalyst layer and the large width portion; and a second gasket layer located around the large width portion of the porous diffusion layer when viewed from a direction perpendicular to the contact surface, wherein the first gasket layer is located between the second gasket layer and the polymer electrolyte membrane. The first gasket layer may be located around the electrode catalyst layer and the small width portion of the porous diffusion layer when viewed from a direction perpendicular to the contact surface; the first gasket layer may be formed of a first bonding layer that is the bonding layer, a second bonding layer, and a gasket base material sandwiched between the first bonding layer and the second bonding layer; the first bonding layer may be bonded to the contact surface; and a part of the large width portion of the porous diffusion layer may be bonded to the second bonding layer, the part protruding from the small width portion in a direction parallel to the contact surface.

According to the configuration, in the membrane electrode assembly including the porous diffusion layer, the polymer electrolyte membrane is prevented from being exposed from between the electrode catalyst layer and the gasket layer.

A polymer electrolyte fuel cell for solving the problem includes the membrane electrode assembly and a pair of separators sandwiching the membrane electrode assembly.

According to the configuration, in the membrane electrode assembly, the polymer electrolyte membrane is prevented from being exposed from between the electrode catalyst layer and the gasket layer.

### [Advantageous Effects of the Invention]

According to the present invention, a polymer electrolyte membrane can be prevented from being exposed from between an electrode catalyst layer and a gasket layer.

### [Brief Description of Drawings]

Fig. 1 is a cross-sectional view illustrating a cross-sectional structure of a membrane electrode assembly, according to a first embodiment.
Fig. 2 is a cross-sectional view illustrating a part of the cross-sectional structure of the membrane electrode assembly, or an enlarged view of a portion A circled by a dash-dot line in Fig. 1, according to the first embodiment.
Fig. 3 is a plan view illustrating a planar structure of the membrane electrode assembly, according to the first embodiment.
Fig. 4 is a diagram illustrating a step of disposing a transfer bonding layer and a gasket layer in a method for producing a membrane electrode assembly, according to the first embodiment.
Fig. 5 is a diagram illustrating a step of forming an electrode catalyst layer in the method for producing a membrane electrode assembly, according to the first embodiment.
Fig. 6 is a diagram illustrating a step of transferring the electrode catalyst layer and the gasket layer in the method for producing a membrane electrode assembly, according to the first embodiment.
Fig. 7 is a diagram illustrating a step of transferring the electrode catalyst layer and the gasket layer in the method for producing a membrane electrode assembly, according to the first embodiment.
Fig. 8 is a diagram illustrating a step of bonding a porous diffusion layer in the method for producing a membrane electrode assembly, according to the first embodiment.
Fig. 9 is a cross-sectional view illustrating a cross-sectional structure of a membrane electrode assembly, according to second and third embodiments.
Fig. 10 is a cross-sectional view illustrating a part of the cross-sectional structure of the membrane electrode assembly, or an enlarged view of a portion circled by a dash-dot line in Fig. 9, according to the second and third embodiments.
Fig. 11 is a plan view illustrating a planar structure of the membrane electrode assembly, according to the second and third embodiments.
Fig. 12 is a diagram illustrating a step of disposing a first gasket layer in a method for producing a membrane electrode assembly, according to the second embodiment.
Fig. 13 is a diagram illustrating a step of forming an electrode catalyst layer in the method for producing a membrane electrode assembly, according to the second embodiment.
Fig. 14 is a diagram illustrating a step of transferring the electrode catalyst layer and the first gasket layer in the method for producing a membrane electrode assembly, according to the second embodiment.
Fig. 15 is a diagram illustrating a step of transferring the electrode catalyst layer and the first gasket layer in the method for producing a membrane electrode assembly, according to the second embodiment.
Fig. 16 is a diagram illustrating a step of disposing a porous diffusion layer and a second gasket layer in the method for producing a membrane electrode assembly, according to the second embodiment.
Fig. 17 is a diagram illustrating a step of disposing a first gasket layer in the method for producing a membrane electrode assembly, according to the third embodiment.
Fig. 18 is a diagram of the step of forming an electrode catalyst layer in a method for producing a membrane electrode assembly, according to the third embodiment.
Fig. 19 is a diagram illustrating a step of disposing the electrode catalyst layer, the first gasket layer, a porous diffusion layer, and a second gasket layer in the method for producing a membrane electrode assembly, according to the third embodiment.
Fig. 20 is a diagram illustrating a step of disposing the electrode catalyst layer, the first gasket layer, the porous diffusion layer, and the second gasket layer in the method for producing a membrane electrode assembly, according to the third embodiment.
Fig. 21 is a perspective view illustrating a perspective structure of a polymer electrolyte fuel cell, according to a fourth embodiment.
Fig. 22 is a cross-sectional view illustrating a cross-sectional structure of a polymer electrolyte fuel cell, according to a conventional example.

### [Description of Embodiments]

### (First Embodiment)

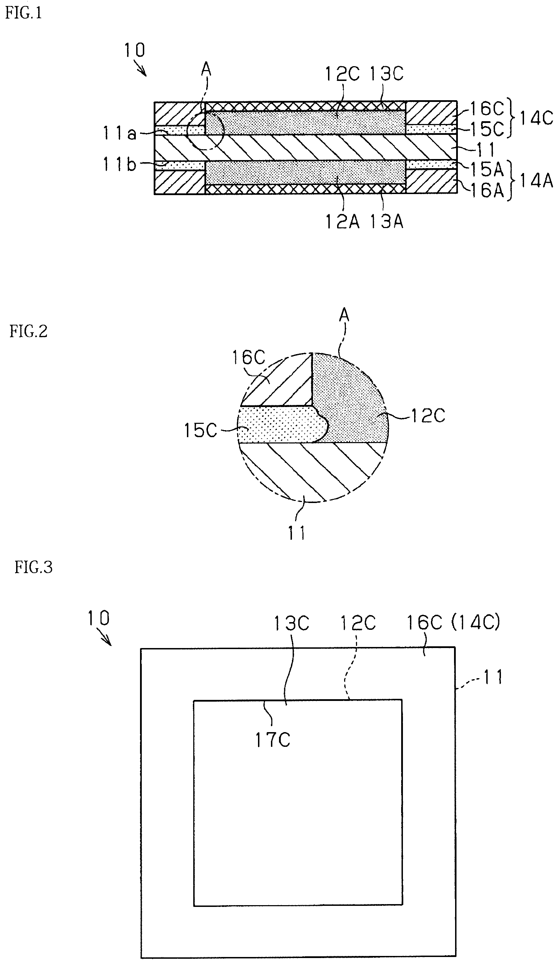

Referring to Figs. 1 to 8, a first embodiment will be described. The first embodiment relates to a membrane electrode assembly and a method for producing a membrane electrode assembly.

### [Configuration of Membrane Electrode Assembly]

First, referring to Figs. 1 to 3, a configuration of a membrane electrode assembly will be described.

As shown in Fig. 1, a membrane electrode assembly 10 includes a polymer electrolyte membrane 11, a pair of electrode catalyst layers 12C and 12A, a pair of porous diffusion layers 13C and 13A, and a pair of gasket layers 14C and 14A. The gasket layer 14C is in an annular shape, and configured of a gasket bonding layer 15C and a gasket base material 16C. The gasket layer 14A is in an annular shape, and configured of a gasket bonding layer 15A and a gasket base material 16A.

The polymer electrolyte membrane 11 includes a cathode contact surface 11a and an anode contact surface 11b. In the polymer electrolyte membrane 11, the cathode contact surface 11a is on the opposite side of the anode contact surface 11b. The cathode contact surface 11a and the anode contact surface 11b are substantially parallel to each other.

The electrode catalyst layer 12C, the porous diffusion layer 13C, and the gasket layer 14C are disposed on the cathode contact surface 11a of the polymer electrolyte membrane 11. The electrode catalyst layer 12C corresponds to the cathode of a polymer electrolyte fuel cell. The electrode catalyst layer 12A, the porous diffusion layer 13A, and the gasket layer 14A are disposed on the anode contact surface 11b of the polymer electrolyte membrane 11. The electrode catalyst layer 12A corresponds to the anode of a polymer electrolyte fuel cell. Two members in each of the pair of the electrode catalyst layers 12C and 12A, the pair of the porous diffusion layers 13C and 13A, and the pair of the gasket layers 14C and 14A, are preferably plane-symmetrically arranged sandwiching the polymer electrolyte membrane 11.

The electrode catalyst layer 12C, which is in surface contact with the cathode contact surface 11a, is located between the polymer electrolyte membrane 11 and the porous diffusion layer 13C.

On the cathode contact surface 11a, the gasket layer 14C is disposed outside the outer edges of the electrode catalyst layer 12C and the porous diffusion layer 13C, and in contact with the electrode catalyst layer 12C and the porous diffusion layer 13C. In the gasket layer 14C, the gasket bonding layer 15C is in surface contact with the cathode contact surface 11a, and sandwiched between the polymer electrolyte membrane 11 and the gasket base material 16C. The thickness of the electrode catalyst layer 12C is preferably greater than that of the gasket bonding layer 15C.

As shown in Fig. 2, in the portion where the electrode catalyst layer 12C is in contact with the gasket bonding layer 15C, the gasket bonding layer 15C partially extrudes into the electrode catalyst layer 12C. In other words, the gasket bonding layer 15C protrudes into the electrode catalyst layer 12C which is located inward of the inner perimeter of the gasket base material 16C, when viewed from a direction that is a direction perpendicular to the cathode contact surface 11a.

As shown in Fig. 3, when viewed from the perpendicular direction, the outer shape of the polymer electrolyte membrane 11, the outer shape of the electrode catalyst layer 12C, and the outer shape of the porous diffusion layer 13C are all in a rectangular shape. When viewed from the perpendicular direction, the outer shape of the gasket layer 14C is a rectangular frame shape. The overall size of the electrode catalyst layer 12C is smaller than that of the polymer electrolyte membrane 11, with the electrode catalyst layer 12C being arranged substantially the center of the polymer electrolyte membrane 11. The overall size of the porous diffusion layer 13C is almost the same as the overall size of the electrode catalyst layer 12C.

On the cathode contact surface 11a of the polymer electrolyte membrane 11, the gasket layer 14C is disposed around a laminate formed of the electrode catalyst layer 12C and the porous diffusion layer 13C to entirely cover the region outside the outer perimeter of the laminate formed of the electrode catalyst layer 12C and the porous diffusion layer 13C. In other words, when viewed from the perpendicular direction, the overall size of the laminate formed of the electrode catalyst layer 12C and the porous diffusion layer 13C is substantially in conformity with the overall size of an opening 17C defined by the inner perimeter of the gasket layer 14C. The laminate formed of the electrode catalyst layer 12C and the porous diffusion layer 13C is filled in the opening 17C.

The positional relationship between the electrode catalyst layer 12A and the porous diffusion layer 13A and their shapes are similar to the positional relationship between the electrode catalyst layer 12C and the porous diffusion layer 13C and their shapes. The positional relationship of the electrode catalyst layer 12A and the porous diffusion layer 13A to the gasket layer 14A and their shapes are similar to the positional relationship of the electrode catalyst layer 12C and the porous diffusion layer 13C with the gasket layer 14C and their shapes.

### [Method for producing Membrane Electrode Assembly]

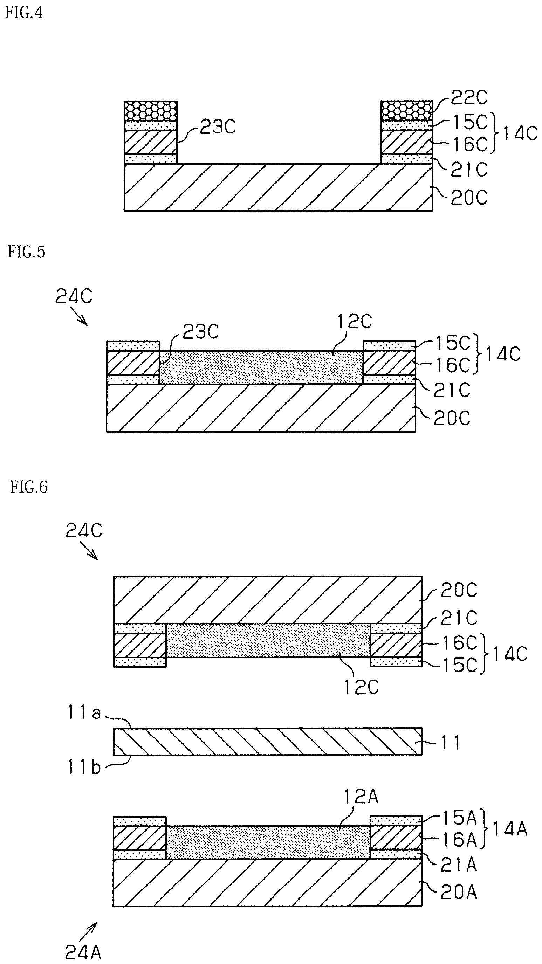

Referring to Figs. 4 to 8, a method for producing the membrane electrode assembly 10 will be described.

As shown in Fig. 4, in a first step, a laminate configured of a transfer bonding layer 21C and the gasket layer 14C is disposed on the upper surface of a support base material 20C. The upper surface of the laminate is covered with a protective sheet 22C. The support base material 20C is in contact with the transfer bonding layer 21C. In the gasket layer 14C, the gasket base material 16C is in contact with the transfer bonding layer 21C, while the gasket bonding layer 15C is in contact with the protective sheet 22C. Thus, the gasket base material 16C is sandwiched between the two bonding layers, i.e. the transfer bonding layer 21C and the gasket bonding layer 15C.

In disposing the transfer bonding layer 21C and the gasket layer 14C on the upper surface of the support base material 20C, first, the transfer bonding layer 21C is formed on one surface of the gasket base material 16C, and the gasket bonding layer 15C is formed on the other surface of the gasket base material 16C. Then, a laminate configured of the transfer bonding layer 21C, the gasket base material 16C, and the gasket bonding layer 15C is disposed on the upper surface of the support base material 20C such that the transfer bonding layer 21C is in contact with the support base material 20C, i.e., the transfer bonding layer 21C is located between the upper surface of the support base material 20C and the gasket layer 14C.

In a planar direction that is a direction parallel to the upper surface of the support base material 20C, the inner perimeter of a laminate configured of the transfer bonding layer 21C, the gasket layer 14C, and the protective sheet 22C defines an opening 23C having a shape corresponding to the outer shape of the electrode catalyst layer 12C.

The support base material 20C is a sheet made of a material from which the electrode catalyst layer 12C can be peeled. Materials that can be used for the support base material 20C include, for example, fluorine resins, such as ethylene tetrafluoroethylene copolymer (ETFE), tetrafluoroethylene-hexafluoropropylene copolymer (FEP), tetrafluoroperfluoroalkyl vinyl ether copolymer (PFA), and polytetrafluoroethylene (PTFE).

The thickness of the support base material 20C is appropriately selected according to the materials such that the strength and the heat resistance are properly ensured. The thickness of the support base material 20C is preferably in the range of about 1 µm to 100 µm.

As the transfer bonding layer 21C and the gasket bonding layer 15C, an adhesive layer that does not need solidification in bonding an object may be used, or an adhesive layer that needs solidification in bonding an object may be used. The transfer bonding layer 21C and the gasket bonding layer 15C only need to have a desired peeling strength, and their materials are not particularly limited. Usable materials for the transfer bonding layer 21C and the gasket bonding layer 15C include, for example, an epoxy resin, acrylic resin, urethane resin, silicone resin, rubber, and the like. The transfer bonding layer 21C and the gasket bonding layer 15C may be formed of the same material, or may be formed of different materials.

The transfer bonding layer 21C preferably has a greater adhesive strength to the support base material 20C than to the gasket base material 16C. The adhesive strength of the transfer bonding layer 21C to the support base material 20C is preferably 0.1 N/25 mm or more at 180° peeling strength (JIS-K-6854-2: 1999) measured at a peel rate of 300 mm/min using a tensile tester. At a peeling strength of 0.1 N/25 mm or more, the adhesion of the transfer bonding layer 21C to the support base material 20C is enhanced, reducing the formation of a gap between the gasket layer 14C and the support base material 20C. As a result, in forming the electrode catalyst layer 12C, a catalyst ink is prevented from entering into the gap between the gasket layer 14C and the support base material 20C, thereby improving the linearity of the outer perimeter of the electrode catalyst layer 12C.

The thickness of the transfer bonding layer 21C or the gasket bonding layer 15C is not particularly limited. However, preferably, the thickness is in the range of 0.1 µm to 30 µm, inclusive. If the thickness of the transfer bonding layer 21C or the gasket bonding layer 15C is 0.1 µm or more, unevenness in coating is minimized in forming the layer.

The gasket base material 16C is made of a resin commonly used for a polymer electrolyte fuel cell, from among thermoplastic resins. For example, usable materials for the gasket base material 16C include polyethylene terephthalate (PET), polyethylene naphtahalate (PEN), syndiotactic polystyrene (SPS), polytetrafluoroethylene (PTFE), polyimide (PI), and the like.

The thickness of the gasket base material 16C is appropriately selected according to the material, such that the strength and the heat resistance are properly ensured. The thickness of the gasket base material 16C is preferably in the range of about 1 µm to 200 µm.

As shown in Fig. 5, in a second step, a catalyst ink is coated inside the opening 23C, followed by drying, and thus the electrode catalyst layer 12C is formed on a portion of the upper surface of the support base material 20C, exposed from the transfer bonding layer 21C and the gasket layer 14C. After forming the electrode catalyst layer 12C, the protective sheet 22C is peeled off.

The support base material 20C, the transfer bonding layer 21C, the gasket layer 14C, and the electrode catalyst layer 12C configure a layered body 24C.

The catalyst ink contains a polyelectrolyte, a catalyst material, and an ink solvent.

Materials used for the polyelectrolyte contained in the catalyst ink include, for example, a polymeric material having proton conductivity, such as a fluorine polyelectrolyte and a hydrocarbon polyelectrolyte. Fluorine polyelectrolytes include, for example, NAFION (registered trademark) manufactured by E. I. du Pont de Nemours and Company, FLEMION (registered trademark) manufactured by Asahi Glass Co., Ltd, ACIPLEX (registered trademark) manufactured by Asahi Kasei Corporation, GORE-SELECT (registered trademark) manufactured by W. L. Gore & Associates, Inc., or the like. Among these materials, NAFION (registered trademark) manufactured by E. I. du Pont de Nemours and Company is preferably used in order to increase the output voltage of the polymer electrolyte fuel cell. The hydrocarbon polyelectrolyte includes, for example, electrolytes, such as sulfonated polyether ketone, sulfonated polyether sulfone, sulfonated polyether ether sulfone, sulfonated polysulfide, and sulfonated polyphenylene.

As the catalyst material, for example, platinum (Pt), ruthenium (Ru), rhodium (Rh), molybdenum (Mo), chromium (Cr), cobalt (Co), iron (Fe), or the like is preferably used. In particular, platinum is preferably used for the catalyst material. The catalyst material is preferably supported on carbon particles, which are an electrically conductive support. However, a catalyst material as a simple substance may be used. As the carbon particles, for example, carbon black or the like can be used.

As the ink solvent, it is preferable to use a solvent that erodes neither the catalyst material-supporting carbon body that is a carbon particle supporting a catalyst material, nor a polyelectrolyte. In the solvent, the polyelectrolyte is dissolved in a fluidal state, or the polyelectrolyte is dispersed as a micro gel. Such an ink solvent preferably contains a volatile organic solvent. As the organic solvent, mention can be made, for example, of alcohols, such as methanol, ethanol, 1-propanol, 2-propanol, 1-butanol, 2-butanol, isobutyl alcohol, tert-butyl alcohol, and pentanol, ketone-based solvents, such as acetone, methylethyl ketone, pentanone, methylisobutylketone, heptanone, cyclohexanone, methylcyclohexanone, acetonyl-acetone, and diisobutyl ketone, ether-based solvents, such as tetrahydrofuran, dioxane, diethylene glycol dimethylether, anisole, methoxytoluene, and dibutylether, and polar solvents, such as dimethylformamide, dimethylacetamide, N-methylpyrrolidone, ethylene glycol, diethylene glycol, diacetone alcohol, and 1-methoxy-2-propanol. Among these organic solvents, two or more solvents may be mixed for use as an ink solvent.

When a lower alcohol is used as an organic solvent, the ink solvent is preferably a mixed solvent of an organic solvent and water to raise the ignition temperature of the ink solvent. To enhance an affinity between the polyelectrolyte and the ink solvent as well, the ink solvent preferably contains water to an extent that white turbidity is not caused due to separation of the polyelectrolyte from the ink solvent, or to an extent that the polyelectrolyte is not gelled.

The catalyst ink preferably has a solid content, such as of the polyelectrolyte and the catalyst material-supporting carbon body, in the range of 1 mass% to 50 mass%, inclusive. When the solid content of the catalyst ink is 50 mass% or less, the viscosity of the catalyst ink is not excessively high, resisting the formation of cracks in the surface of the electrode catalyst layer 12C. On the other hand, when the solid content is 1 mass% or more, the viscosity of the catalyst ink is not excessively low, appropriately ensuring the forming speed of the electrode catalyst layer 12C to thereby minimize lowering of productivity of the electrode catalyst layer 12C.

If the content of the polyelectrolyte is equal to that of the catalyst material-supporting carbon body in the catalyst ink, the viscosity of the catalyst ink increases more as the ratio of the carbon particles in the solids increases, and conversely, the viscosity of the catalyst ink decreases more as the ratio of the carbon particles decreases. Therefore, concentration of the carbon particles in the solids contained in the catalyst ink is preferably in the range of 10 mass% to 80 mass%, inclusive.

Besides the adjustment of the solid content of the catalyst ink and the adjustment of the concentration of the carbon particles in the solids, the viscosity of the catalyst ink can also be adjusted to a predetermined value by adding a dispersant to the catalyst ink in the process of dispersing solids in the ink solvent. The mass ratio of the polyelectrolyte to the catalyst material-supporting carbon body is preferably in the range of 0.04 mass% to 3.00 mass%, inclusive.

As the method of coating the catalyst ink to the support base material 20C, doctor blading, dipping, screen printing, roll coating, spraying, or the like is used. Among these coating methods, spraying, such as pressure spraying, ultrasonic spraying, or electrostatic spraying, is preferably used. With these methods, the catalyst ink is unlikely to be agglomerated when drying the coated catalyst ink, and hence a uniform electrode catalyst layer 12C of high porosity can be obtained.

In the step of coating the catalyst ink, when the temperature of the catalyst ink is 10°C or more, the viscosity of the catalyst ink is not excessively high, enhancing the uniformity of the electrode catalyst layer 12C to be formed. When the ink temperature is 50°C or less, the volatilization of the ink solvent can be minimized in coating the catalyst ink. The thickness of the electrode catalyst layer 12C is not particularly limited, but preferably in the range of about 1 µm to 30 µm.

As shown in Fig. 6, similarly to the electrode catalyst layer 12C, the electrode catalyst layer 12A is also formed by coating the above-described catalyst ink onto the upper surface of the support base material 20A, on which the transfer bonding layer 21A and the gasket layer 14A are laminated, and drying the coated catalyst ink. The support base material 20A, the transfer bonding layer 21A, the gasket layer 14A, and the electrode catalyst layer 12A configure a layered body 24A.

The layered body 24C and the layered body 24A are disposed sandwiching the polymer electrolyte membrane 11. In this case, the electrode catalyst layer 12C and the gasket bonding layer 15C are ensured to face the cathode contact surface 11a of the polymer electrolyte membrane 11, and the electrode catalyst layer 12A and the gasket bonding layer 15A are ensured to face the anode contact surface 11b of the polymer electrolyte membrane 11.

Then, in a third step, with the polymer electrolyte membrane 11 being sandwiched between two layered bodies 24C and 24A, the layered bodies 24C and 24A and the polymer electrolyte membrane 11 are heated and pressed. As a result, the electrode catalyst layer 12C and the gasket layer 14C are compression bonded to the cathode contact surface 11a of the polymer electrolyte membrane 11. Also, the electrode catalyst layer 12A and the gasket layer 14A are compression bonded to the anode contact surface 11b of the polymer electrolyte membrane 11.

Typically, the rigidity of the electrode catalyst layers 12C and 12A and the gasket bonding layers 15C and 15A is lower than the rigidity of the gasket base materials 16C and 16A. The rigidity of the electrode catalyst layers 12C and 12A is lower than the rigidity of the gasket bonding layers 15C and 15A. Therefore, due to the application of pressure in compression bonding, the inner perimeters of the gasket bonding layers 15C and 15A are crushed by the gasket base materials 16C and 16A, and partially extrudes into the outer perimeters of the electrode catalyst layers 12C and 12A contacting the inner perimeters of the gasket bonding layers 15C and 15A. In other words, in the transfer of the electrode catalyst layer 12C and the gasket layer 14C, both of them are pressed against the polymer electrolyte membrane 11. As a result, there is formed a structure in which the gasket bonding layer 15C partially extrudes into the electrode catalyst layer 12C. Also, in the transfer of the electrode catalyst layer 12A and the gasket layer 14A, both of them are pressed against the polymer electrolyte membrane 11. As a result, there is formed a structure in which the gasket bonding layer 15A partially extrudes into the electrode catalyst layer 12A. The gasket bonding layers 15C and 15A are pressed by both of the gasket base materials 16C and 16A and the polymer electrolyte membrane 11. Therefore, in the inner perimeters of the gasket bonding layers 15C and 15A, the middle positions in the thickness direction are more likely to partially extrude into the electrode catalyst layers 12C and 12A than in both end portions in the thickness direction.

The polymer electrolyte membrane 11 is a polymer membrane having proton conductivity. Usable materials for the polymer electrolyte membrane 11 include, for example, a fluorine polyelectrolyte and a hydrocarbon polyelectrolyte. The fluorine polyelectrolyte includes, for example, NAFION (registered trademark) manufactured by E. I. du Pont de Nemours and Company, FLEMION (registered trademark) manufactured by Asahi Glass Co., Ltd, ACIPLEX (registered trademark) manufactured by Asahi Kasei Corporation, and GORE-SELECT (registered trademark) manufactured by W. L. Gore & Associates, Inc. In particular, NAFION (registered trademark) manufactured by E. I. du Pont de Nemours and Company is preferably used to increase the output voltage of a polymer electrolyte fuel cell.

As the hydrocarbon polymer electrolyte membrane, an electrolyte membrane, such as sulfonated poly ether ketone, sulfonated polyether sulfone, sulfonated polyether ether sulfone, sulfonated polysulfide, or sulfonated polyphenylene, is preferably used. In order to enhance the adhesion of the electrode catalyst layers 12C and 12A to the polymer electrolyte membrane 11, the polyelectrolyte contained in the electrode catalyst layers 12C and 12A is preferably the same as the polyelectrolyte configuring the polymer electrolyte membrane 11.

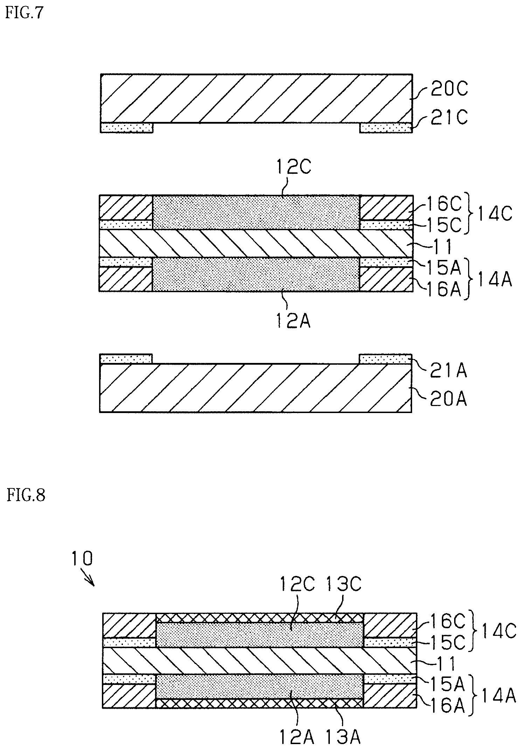

As shown in Fig. 7, in a fourth step following the compression bonding of the electrode catalyst layers 12C and 12A and the gasket layers 14C and 14A to the polymer electrolyte membrane 11, the support base materials 20C and 20A are peeled off. In this case, the transfer bonding layer 21C, being stuck to the support base material 20C, is peeled off from the gasket layer 14C together with the support base material 20C. Also, the transfer bonding layer 21A, being stuck to the support base material 20A, is peeled off from the gasket layer 14A together with the support base material 20A. When the transfer bonding layers 21C and 21A have a greater adhesive strength to the support base materials 20C and 20A than to the gasket base materials 16C and 16A, the transfer bonding layers 21C and 21A can be easily peeled off from the gasket base materials 16C and 16A.

In a state where the electrode catalyst layers 12C and 12A and the gasket layers 14C and 14A have been transferred to the polymer electrolyte membrane 11, the thicknesses of the electrode catalyst layers 12C and 12A may be approximately the same as the thicknesses of the gasket layers 14C and 14A, respectively, or may be smaller than the thicknesses of the gasket layers 14C and 14A, respectively.

As shown in Fig. 8, in a fifth step, the porous diffusion layers 13C and 13A are disposed sandwiching the polymer electrolyte membrane 11 which is provided with the electrode catalyst layers 12C and 12A and the gasket layers 14C and 14A, followed by heating and pressing these members. Thus, the porous diffusion layer 13C is compression bonded to the electrode catalyst layer 12C, and the porous diffusion layer 13A is compression bonded to the electrode catalyst layer 12A, thereby forming the membrane electrode assembly 10.

The porous diffusion layers 13C and 13A include a base material formed of a material having gas diffusibility and electrical conductivity. As the base material, for example, porous carbon materials, such as carbon cloth, carbon paper, and nonwoven fabric, can be used. In addition to the base material, the porous diffusion layers 13C and 13A preferably include a micro porous layer formed on the base material. As the micro porous layer, for example, a layer obtained by baking a fluorine resin solution dispersed with carbon particles at a temperature of not less than the melting point of the fluorine resin can be used. As the fluorine resin, polytetrafluoroethylene (PTFE), or the like is used.

In the steps described above, the transfer of the electrode catalyst layer 12C and the gasket layer 14C from the layered body 24C to the cathode contact surface 11a of the polymer electrolyte membrane 11 is performed at the same time with the transfer of the electrode catalyst layer 12A and the gasket layer 14A from the layered body 24A to the anode contact surface 11b of the polymer electrolyte membrane 11. Alternatively, the transfer of the electrode catalyst layer 12C and the gasket layer 14C to the cathode contact surface 11a may be performed separately from the transfer of the electrode catalyst layer 12A and the gasket layer 14A to the anode contact surface 11b. For example, the cathode contact surface 11a and the layered body 24C can be located face-to-face, followed by heating and pressing the polymer electrolyte membrane 11 and the layered body 24C, and then the anode contact surface 11b and the layered body 24A can be located face-to-face, followed by heating and pressing the polymer electrolyte membrane 11 and the layered body 24A.

### [Advantageous Effects]

The advantageous effects of the foregoing method for producing the membrane electrode assembly 10 will be described.

In the production method described above, in a state where the gasket layers 14C and 14A are disposed on the upper surfaces of the support base materials 20C and 20A, respectively, the electrode catalyst layers 12C and 12A are formed using the gasket layers 14C and 14A, respectively, as masks. The layered body 24C including the electrode catalyst layer 12C and the gasket layer 14C, and the layered body 24A including the electrode catalyst layer 12A and the gasket layer 14A are pressed against the polymer electrolyte membrane 11, causing the electrode catalyst layers 12C and 12A and the gasket layers 14C and 14A to transfer to the polymer electrolyte membrane 11.

According to such a production method, the electrode catalyst layers 12C and 12A are formed on the upper surfaces of the support base materials 20C and 20A, respectively, on which the gasket layers 14C and 14A are disposed. Thus, in forming the electrode catalyst layers 12C and 12A, the sizes of the inner perimeters of the gasket layers 14C and 14A can be brought into conformity with the those of the outer perimeters of the electrode catalyst layers 12C and 12A. Then, the electrode catalyst layer 12C and the gasket layer 14C are simultaneously transferred to the cathode contact surface 11a of the polymer electrolyte membrane 11, and the electrode catalyst layer 12A and the gasket layer 14A are simultaneously transferred to the anode contact surface 11b of the polymer electrolyte membrane 11. Therefore, a gap is prevented from being formed between the electrode catalyst layer 12C and the gasket layer 14C or between the electrode catalyst layer 12A and the gasket layer 14A. As a result, the polymer electrolyte membrane 11 is prevented from being exposed from between the electrode catalyst layer 12C or 12A and the gasket layer 14C or 14A, respectively.

Since the gasket layers 14C and 14A are used as masks in forming the electrode catalyst layers 12C and 12A, respectively, the number of members needed to form the electrode catalyst layers 12C and 12A can be reduced. Moreover, since the transfer bonding layers 21C and 21A are peeled off together with the support base materials 20C and 20A, respectively, members unnecessary for the membrane electrode assembly 10 will not be disposed on the polymer electrolyte membrane 11 in the transfer of the electrode catalyst layers 12C and 12A and the gasket layers 14C and 14A.

In a structure proposed conventionally, a gasket layer is disposed on the surface of an electrode catalyst layer to prevent a polymer electrolyte membrane from being exposed from between the electrode catalyst layer and the gasket layer. Compared with such a structure, in the membrane electrode assembly 10 according to the present embodiment, the electrode catalyst layers 12C and 12A do not overlap with the gasket layers 14C and 14A, respectively, when viewed from the perpendicular direction. Accordingly, gas diffusion is prevented to thereby minimize production of portions not contributing to generation of electric power in the electrode catalyst layers 12C and 12A. As a result, if a precious metal of an expensive platinum group is used for the electrode catalyst layers 12C and 12A, cost increase incurred in producing the membrane electrode assembly 10 is minimized. Further, when viewed from the perpendicular direction, the membrane electrode assembly will not have thickness variation which would otherwise have been caused by the presence of the portions with or without the overlap between the electrode catalyst layer and the gasket layer.

In the first embodiment, the laminate configured of the transfer bonding layer 21C and the gasket layer 14C and the laminate configured of the transfer bonding layer 21A and the gasket layer 14A are examples of transfer members.

As described above, according to the method for producing a membrane electrode assembly, and the membrane electrode assembly of the present embodiment, the advantageous effects enumerated below can be obtained.
(1) In forming the electrode catalyst layers 12C and 12A, the sizes of the inner perimeters of the gasket layers 14C and 14A are brought into conformity with those of the outer perimeters of the electrode catalyst layers 12C and 12A. The electrode catalyst layers 12C and 12A and the gasket layers 14C and 14A are simultaneously transferred to the contact surfaces 11a and 11b, respectively, of the polymer electrolyte membrane 11. Accordingly, the polymer electrolyte membrane 11 is prevented from being exposed from a gap that could be formed between the electrode catalyst layer 12C or 12A and the gasket layer 14C or 14A, respectively. Further, since the gasket layers 14C and 14A are bonded to the support base materials 20C and 20A, respectively, through the transfer bonding layers 21C and 21A, the gasket layers 14C and 14A are easily fixed to the support base materials 20C and 20A, respectively.
(2) The gasket layers 14C and 14A are configured of the gasket bonding layers 15C and 15A and the gasket base materials 16C and 16A, respectively. In the layered body 24C or 24A, the gasket base material 16C or 16A is sandwiched between the transfer bonding layer 21C or 21A and the gasket bonding layer 15C or 15A, respectively. Thus, the gasket base materials 16C and 16A are bonded to the polymer electrolyte membrane 11 through the gasket bonding layers 15C and 15A, respectively, thereby enhancing adhesion of the gasket layers 14C and 14A to the polymer electrolyte membrane 11.
(3) The transfer bonding layers 21C and 21A has a greater adhesive strength to the support base materials 20C and 20A, respectively, than to the gasket base materials 16C and 16A. Thus, when peeling off the support base materials 20C and 20A, the transfer bonding layers 21C and 21A can be easily peeled off from the gasket layers 14C and 14A, respectively, together with the support base materials 20C and 20A.
(4) Due to the application of pressure in the transfer of the electrode catalyst layers 12C and 12A and the gasket layers 14C and 14A, the inner perimeters of the gasket bonding layers 15C and 15A partially extrude into the outer perimeters of the electrode catalyst layers 12C and 12A, respectively. Thus, a gap is prevented from being formed between the electrode catalyst layer 12C or 12A and the gasket layer 14C or 14A.

### (Modifications)

The first embodiment can be modified for implementation as below.

The gasket layer 14C may be configured of only the gasket base material 16C without the gasket bonding layer 15C. Similarly, the gasket layer 14A may be configured of only the gasket base material 16A without the gasket bonding layer 15A.

The porous diffusion layers 13C and 13A may be omitted.

When viewed from the perpendicular direction, the shapes of the electrode catalyst layers 12C and 12A, the shapes of the porous diffusion layers 13C and 13A, and the shapes of the gasket layers 14C and 14A may be in a triangular shape, or may be in a polygonal shape having five or more corners, or may be in a circular shape, or may be in an elliptic shape. The inner perimeters of the gasket layers 14C and 14A may be tilted relative to the perpendicular direction. For example, the inner perimeter of the gasket layer 14C may form an inverse taper when viewed from the support base material 20C side, such that the cross-sectional area of the opening 23C of the layered body 24C is reduced toward the support base material 20C. In other words, the inner surface of the layered body 24C defining the opening 23C forms a truncated pyramid shape, and the electrode catalyst layer 12C is filled therein to cover the bottom part of the opening 23C in such a shape. In this case, in the membrane electrode assembly 10, the inner perimeter of the gasket layer 14C forms a taper when viewed from the polymer electrolyte membrane 11 side. According to such a production method, the electrode catalyst layers 12C and 12A and the gasket layers 14C and 14A can also be formed into a shape which has been difficult to be formed by a conventional production method in which the electrode catalyst layers 12C and 12A are disposed separately from the gasket layers 14C and 14A on the surface of the polymer electrolyte membrane 11.

### (Second Embodiment)

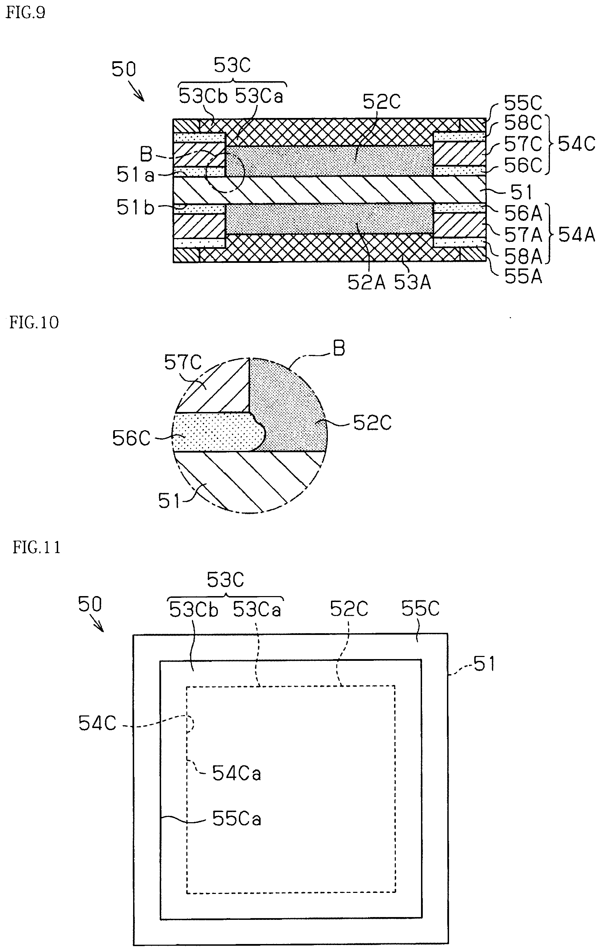

Referring now to Figs. 9 to 16, a second embodiment will be described. The second embodiment relates to a membrane electrode assembly and a method for producing a membrane electrode assembly.

### [Configuration of Membrane Electrode Assembly]

First, referring to Figs. 9 to 11, a configuration of a membrane electrode assembly will be described.

As shown in Fig. 9, a membrane electrode assembly 50 includes a polymer electrolyte membrane 51, a pair of electrode catalyst layers 52C and 52A, a pair of porous diffusion layers 53C and 53A, a pair of the first gasket layers 54C and 54A in an annular shape, and a pair of second gasket layers 55C and 55A in an annular shape. The first gasket layer 54C is configured of a first bonding layer 56C, a second bonding layer 58C, and a gasket base material 57C sandwiched between the first and second bonding layers 56C and 58C and in contact with them. The first gasket layer 54A is configured of a first bonding layer 56A, a second bonding layer 58A, and a gasket base material 57A sandwiched between the first and second bonding layers 56A and 58A and in contact with them.

The polymer electrolyte membrane 51 has a cathode contact surface 51a and an anode contact surface 51b. The cathode contact surface 51a of the polymer electrolyte membrane 51 is located on the opposite side of the anode contact surface 51b. The cathode contact surface 51a and the anode contact surface 51b are located substantially parallel to each other.

The electrode catalyst layer 52C, the porous diffusion layer 53C, the first gasket layer 54C, and the second gasket layer 55C are disposed on the cathode contact surface 51a of the polymer electrolyte membrane 51. The electrode catalyst layer 52C corresponds to the cathode of a polymer electrolyte fuel cell. The electrode catalyst layer 52A, the porous diffusion layer 53A, the first gasket layer 54A, and the second gasket layer 55A are disposed on the anode contact surface 51b of the polymer electrolyte membrane 51. The electrode catalyst layer 52A corresponds to the anode of a polymer electrolyte fuel cell. Two members in each of the pairs of electrode catalyst layers 52C and 52A, the porous diffusion layers 53C and 53A, the first gasket layers 54C and 54A, and the second gasket layers 55C and 55A, are preferably plane-symmetrically arranged sandwiching the polymer electrolyte membrane 51.

The electrode catalyst layer 52C is in surface contact with the cathode contact surface 51a, and located between the polymer electrolyte membrane 51 and the porous diffusion layer 53C.

In the thickness direction of the porous diffusion layer 53C, the porous diffusion layer 53C is separated into a small width portion 53Ca and a large width portion 53Cb. The small width portion 53Ca of the porous diffusion layer 53C is in surface contact with the electrode catalyst layer 52C, and located between the large width portion 53Cb and the polymer electrolyte membrane 51. The large width portion 53Cb has a width in the planar direction or a direction parallel to the cathode contact surface 51a, which is greater than the width of the small width portion 53Ca. The large width portion 53Cb entirely covers the small width portion 53Ca and extends outward of the small width portion 53Ca.

The first gasket layer 54C is located between the second gasket layer 55C and the polymer electrolyte membrane 51. The first gasket layer 54C is disposed on the cathode contact surface 51a so as to be located outside the outer perimeter of the electrode catalyst layer 52C and outside the outer perimeter of the small width portion 53Ca of the porous diffusion layer 53C, and is in contact with the electrode catalyst layer 52C and the small width portion 53Ca. In the first gasket layer 54C, the first bonding layer 56C is bonded to the cathode contact surface 51a, and the second bonding layer 58C is bonded to the second gasket layer 55C and a part of the large width portion 53Cb which protrudes in the planar direction from the small width portion 53Ca. The thickness of the electrode catalyst layer 52C is preferably greater than the thickness of the first bonding layer 56C.

The second gasket layer 55C is disposed on the upper surface of the second bonding layer 58C so as to be located outside the outer perimeter of the large width portion 53Cb of the porous diffusion layer 53C, and is in contact with the large width portion 53Cb.

As shown in Fig. 10, in the portion in which the electrode catalyst layer 52C is in contact with the first bonding layer 56C, the first bonding layer 56C partially extrudes into the electrode catalyst layer 52C. In other words, when viewed from the perpendicular direction that is the direction in which the first bonding layer 56C faces the cathode contact surface 51a, the first bonding layer 56C partially extrudes into the electrode catalyst layer 52C located inside the inner perimeter of the gasket base material 57C.

As shown in Fig. 11, when viewed from the perpendicular direction, the outer shape of the polymer electrolyte membrane 51, the outer shape of the electrode catalyst layer 52C, the outer shape of the small width portion 53Ca of the porous diffusion layer 53C, and the outer shape of the large width portion 53Cb of the porous diffusion layer 53C are all in a rectangular shape. When viewed from the perpendicular direction, the outer shape of the first gasket layer 54C and the outer shape of the second gasket layer 55C are both in a rectangular frame shape.

The electrode catalyst layer 52C whose overall size is smaller than that of the polymer electrolyte membrane 51, is disposed at substantially the center of the polymer electrolyte membrane 51. The overall size of the small width portion 53Ca of the porous diffusion layer 53C is substantially equal to that of the electrode catalyst layer 52C. The overall size of the large width portion 53Cb of the porous diffusion layer 53C is greater than that of the small width portion 53Ca, but smaller than that of the polymer electrolyte membrane 51.

The first gasket layer 54C is disposed on the cathode contact surface 51a of the polymer electrolyte membrane 51 so as to be located around a laminate formed of the electrode catalyst layer 52C and the small width portion 53Ca of the porous diffusion layer 53C, or is filled in entirely covering the region outside the outer perimeter of the laminate formed of the electrode catalyst layer 52C and the small width portion 53Ca. In other words, when viewed from the perpendicular direction, the overall size of the laminate formed of the electrode catalyst layer 52C and the small width portion 53Ca is substantially in conformity with the overall size of an opening 54Ca defined by the inner perimeter of the first gasket layer 54C. Thus, the laminate formed of the electrode catalyst layer 52C and the small width portion 53Ca is filled in the opening 54Ca.

The second gasket layer 55C is disposed on the upper surface of the first gasket layer 54C so as to be located around the large width portion 53Cb of the porous diffusion layer 53C, or is filled in entirely covering the region outside the outer perimeter of the large width portion 53Cb. In other words, when viewed from the perpendicular direction, the overall size of the large width portion 53Cb is substantially in conformity with that of an opening 55Ca defined by the inner perimeter of the second gasket layer 55C. Thus, the large width portion 53Cb is filled in the opening 55Ca.

The positional relationship between the electrode catalyst layer 52A and the porous diffusion layer 53A and the shapes of these members are similar to the positional relationship between the electrode catalyst layer 52C and the porous diffusion layer 53C and the shapes of these members. The positional relationship of the electrode catalyst layer 52A and the porous diffusion layer 53A with the first gasket layer 54A and the shapes of these members are similar to the positional relationship of the electrode catalyst layer 52C and the porous diffusion layer 53C with the first gasket layer 54C and the shapes of these members. Further, the positional relationship of the electrode catalyst layer 52A and the porous diffusion layer 53A with the second gasket layer 55A and the shapes of these members are similar to the positional relationship of the electrode catalyst layer 52C and the porous diffusion layer 53C with the second gasket layer 55C and the shapes of these members.

### [Method for producing Membrane Electrode Assembly]

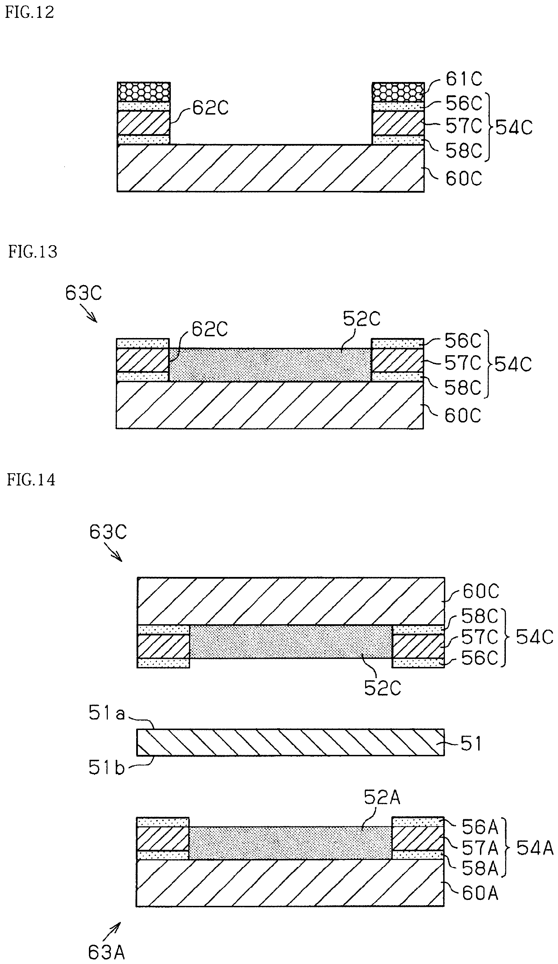

Referring to Figs. 12 to 16, a method for producing the membrane electrode assembly 50 will be described.

As shown in Fig. 12, in a first step, the first gasket layer 54C is disposed on the upper surface of a support base material 60C. The upper surface of the first gasket layer 54C is covered with a protective sheet 61C. The first gasket layer 54C is disposed so as to form a multi-layer configured of layers parallel to the upper surface of the support base material 60C. In the first gasket layer 54C, the second bonding layer 58C is in contact with the support base material 60C, and the first bonding layer 56C is in contact with the protective sheet 61C.

In disposing the first gasket layer 54C on the upper surface of the support base material 60C, first, the first bonding layer 56C is formed on one surface of the gasket base material 57C, and the second bonding layer 58C is formed on the other surface of the gasket base material 57C. Then, the first gasket layer 54C is disposed on the upper surface of the support base material 60C in such a manner that the second bonding layer 58C is in contact with the support base material 60C.

In the planar direction that is a direction parallel to the upper surface of the support base material 60C, the inner perimeter of the laminate configured of the first gasket layer 54C and the protective sheet 61C defines an opening 62C in a shape corresponding to the outer shape of the electrode catalyst layer 52C.

The support base material 60C is a sheet formed of a material from which the electrode catalyst layer 52C can be peeled off. As materials for the support base material 60C, those which are mentioned as materials for the support base material 20C in the first embodiment are used. The thickness of the support base material 60C is preferably determined in the range mentioned as the thickness of the support base material 20C in the first embodiment.

As the first and second bonding layers 56C and 58C, an adhesive layer which does not need solidification or does need solidification when bonded to an object may be used. The first and second bonding layers 56C and 58C only need to have a desired peeling strength. As materials for the bonding layers 56C and 58C, those which are mentioned as materials for the bonding layers 15C and 21C in the first embodiment may be used. The first and second bonding layers 56C and 58C may be formed of the same material, or may be formed of different materials.

The second bonding layer 58C sandwiched between the support base material 60C and the gasket base material 57C preferably has a greater adhesive strength to the gasket base material 57C than to the support base material 60C. The adhesive strength of the second bonding layer 58C to the support base material 60C is preferably 0.1 N/25 mm or more at 180° peeling strength (JIS-K-6854-2: 1999) measured at a peel rate of 300 mm/min using a tensile tester. At a peeling strength of 0.1 N/25 mm or more, the adhesion of the second bonding layer 58C to the support base material 60C is enhanced, reducing the formation of a gap between the first gasket layer 54C and the support base material 60C. As a result, in forming the electrode catalyst layer 52C, the catalyst ink is prevented from entering into the gap between the first gasket layer 54C and the support base material 60C, improving the linearity of the outer perimeter of the electrode catalyst layer 52C.

The thickness of the first bonding layer 56C or the second bonding layer 58C is not particularly limited. However, the thickness is preferably determined in the range mentioned as the thickness of the bonding layer 15C or 21C in the first embodiment.

As materials for the gasket base material 57C, those which are mentioned as materials for the gasket base material 16C in the first embodiment only may be used. The thickness of the gasket base material 57C is appropriately selected according to the materials, such that the strength and the heat resistance are properly ensured. The thickness of the gasket base material 57C is preferably in the range of about 1 µm to 100 µm.

As shown in Fig. 13, in a second step, a catalyst ink is coated to the inside of the opening 62C, followed by drying. Thus, the electrode catalyst layer 52C is formed on a portion of the upper surface of the support base material 60C, exposed from the first gasket layer 54C. After forming the electrode catalyst layer 52C, the protective sheet 61C is peeled off. The support base material 60C, the first gasket layer 54C, and the electrode catalyst layer 52C configure a layered body 63C.

As the composition of the catalyst ink and the coating method, those which are mentioned in the first embodiment are used.

As shown in Fig. 14, the electrode catalyst layer 52A is also formed similarly to the electrode catalyst layer 52C, i.e. formed by coating the catalyst ink onto the upper surface of the support base material 60A, on which the first gasket layer 54A is disposed, followed by drying. The support base material 60A, the first gasket layer 54A, and the electrode catalyst layer 52A configure a layered body 63A.

The layered body 63C and the layered body 63A are disposed sandwiching the polymer electrolyte membrane 51. In this case, the electrode catalyst layer 52C and the first bonding layer 56C face the cathode contact surface 51a of the polymer electrolyte membrane 51, and the electrode catalyst layer 52A and the first bonding layer 56A face the anode contact surface 51b of the polymer electrolyte membrane 51.

In a third step, in a state where the polymer electrolyte membrane 51 is sandwiched between the two layered bodies 63C and 63A, the layered bodies 63C and 63A and the polymer electrolyte membrane 51 are heated and pressed. Thus, the electrode catalyst layer 52C and the first gasket layer 54C are compression bonded to the cathode contact surface 51a of the polymer electrolyte membrane 51, while the electrode catalyst layer 52A and the first gasket layer 54A are compression bonded to the anode contact surface 51b of the polymer electrolyte membrane 51.

Typically, the electrode catalyst layers 52C and 52A and the first bonding layers 56C and 56A have rigidity lower than that of the gasket base materials 57C and 57A. Further, the electrode catalyst layers 52C and 52A have rigidity lower than that of the first bonding layers 56C and 56A. Thus, due to the application of pressure in compression bonding, the inner perimeters of the first bonding layers 56C and 56A are crushed by the gasket base materials 57C and 57A, respectively, and partially extrude into the outer perimeters of the electrode catalyst layers 52C and 52A, respectively, contacting the inner perimeters of the first bonding layers 56C and 56A. In other words, in the transfer of the electrode catalyst layer 52C and the first gasket layer 54C, both of them are pressed against the polymer electrolyte membrane 51. As a result, there is formed a structure in which the first bonding layer 56C partially extrudes into the electrode catalyst layer 52C. Also, in the transfer of the electrode catalyst layer 52A and the first gasket layer 54A, both of them are pressed against the polymer electrolyte membrane 51. As a result, there is formed a structure in which the first bonding layer 56A partially extrudes into the electrode catalyst layer 52A. The first bonding layers 56C and 56A are pressed by the gasket base materials 57C and 57A and the polymer electrolyte membrane 51. Thus, in the inner perimeters of the first bonding layers 56C and 56A, the middle positions thereof in the thickness direction are more likely to partially extrude into the electrode catalyst layers 52C and 52A, respectively, than in both end portions in the thickness direction.

As the polymer electrolyte membrane 51, a membrane formed of the materials mentioned as materials for the polymer electrolyte membrane 11 in the first embodiment may be used.

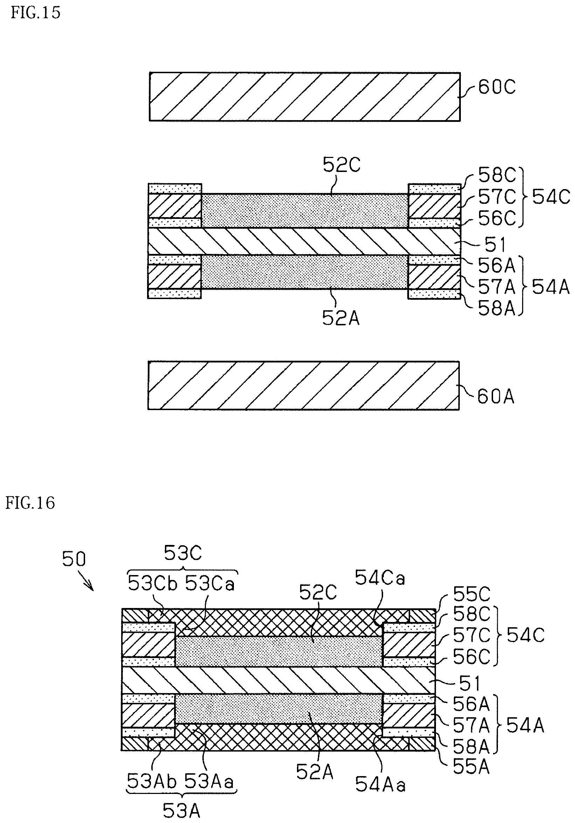

As shown in Fig. 15, in a fourth step following compression bonding of the electrode catalyst layers 52C and 52A and the first gasket layers 54C and 54A to the polymer electrolyte membrane 51, the support base material 60C is peeled off from the electrode catalyst layer 52C and the first gasket layer 54C, and the support base material 60A is peeled off from the electrode catalyst layer 52A and the first gasket layer 54A. When the second bonding layers 58C and 58A have a greater adhesive strength to the gasket base materials 57C and 57A than to the support base materials 60C and 60A, respectively, the support base materials 60C and 60A can be easily peeled off.

In a state where the electrode catalyst layers 52C and 52A and the first gasket layers 54C and 54A have been transferred to the polymer electrolyte membrane 51, the thickness of the electrode catalyst layer 52C or 52A may be approximately the same as the thickness of the first gasket layer 54C or 54A, respectively, or may be smaller than the thickness of the first gasket layer 54C or 54A, respectively.

As shown in Fig. 16, in a fifth step, the porous diffusion layers 53C and 53A and the second gasket layers 55C and 55A are disposed on the multi-layer configured of the polymer electrolyte membrane 51, the electrode catalyst layers 52C and 52A, and the first gasket layers 54C and 54A.

In disposing the porous diffusion layers 53C and 53A and the second gasket layers 55C and 55A, first, two porous sheets to be the porous diffusion layers 53C and 53A are disposed so as to sandwich the multi-layer. The second gasket layers 55C and 55A are disposed outside the outer perimeters of the porous sheets. The porous sheets may be disposed after the second gasket layers 55C and 55A are disposed.

Then, the multi-layer, and the two porous sheets and the second gasket layers 55C and 55A disposed sandwiching the multi-layer are heated and pressed. As a result of the heating and pressing, a portion of one porous sheet is pressed into the opening 54Ca defined by the inner perimeter of the first gasket layer 54C. The portion pressed into the opening 54Ca serves as the small width portion 53Ca and compression bonded to the electrode catalyst layer 52C. The large width portion 53Cb is bonded to the second bonding layer 58C of the first gasket layer 54C. Thus, the porous diffusion layer 53C is formed. Similarly, a portion of the other porous sheet is pressed into the opening 54Aa defined by the inner perimeter of the first gasket layer 54A to form the porous diffusion layer 53A having the small width portion 53Aa and the large width portion 53Ab. In the porous diffusion layer 53A, the small width portion 53Aa is compression bonded to the electrode catalyst layer 52A, and the large width portion 53Ab is bonded to the second bonding layer 58A of the first gasket layer 54A.

The second gasket layer 55C is bonded to the second bonding layer 58C, and the second gasket layer 55A is bonded to the second bonding layer 58A. Thus, the membrane electrode assembly 50 is formed.

The porous diffusion layers 53C and 53A include a base material having gas diffusibility and electrical conductivity, and preferably include a micro porous layer formed on the base material. As the base material, the materials mentioned as the base material for the porous diffusion layers 13C and 13A in the first embodiment may be used. As the micro porous layer, the materials mentioned as materials for the micro porous layer in the first embodiment may be used.

As materials for the second gasket layers 55C and 55A, those which are mentioned as materials for the gasket base material 16C in the first embodiment may be used. The thickness of the second gasket layer 55C or 55A is appropriately selected according to the materials such that the strength and the heat resistance are properly ensured. The thickness of the second gasket layer 55C or 55A is preferably in the range of about 1 µm to 200 µm.

In the steps described above, the transfer of the electrode catalyst layer 52C and the first gasket layer 54C from the layered body 63C to the cathode contact surface 51a of the polymer electrolyte membrane 51 is performed at the same time with the transfer of the electrode catalyst layer 52A and the first gasket layer 54A from the layered body 63A to the anode contact surface 51b of the polymer electrolyte membrane 51. Alternatively, the transfer of the electrode catalyst layer 52C and the first gasket layer 54C to the cathode contact surface 51a may be performed separately from the transfer of the electrode catalyst layer 52A and the first gasket layer 54A to the anode contact surface 51b. For example, the cathode contact surface 51a and the layered body 63C can be located face-to-face, followed by heating and pressing the polymer electrolyte membrane 51 and the layered body 63C, and then, the anode contact surface 51b and the layered body 63A can be located face-to-face, followed by heating and pressing the polymer electrolyte membrane 51 and the layered body 63A.

Similarly, the porous diffusion layer 53C and the second gasket layer 55C may be arranged separately from the arrangement of the porous diffusion layer 53A and the second gasket layer 55A.

### [Advantageous Effects]

The advantageous effects of the foregoing method for producing the membrane electrode assembly 50 will be described.

In the foregoing production method, in a state where the first gasket layers 54C and 54A are disposed on the upper surfaces of the support base materials 60C and 60A, respectively, the electrode catalyst layers 52C and 52A are formed using the first gasket layers 54C and 54A, respectively, as masks. The layered body 63C including the electrode catalyst layer 52C and the first gasket layer 54C and the layered body 63A including the electrode catalyst layer 52A and the first gasket layer 54A are pressed against the polymer electrolyte membrane 51 to transfer the electrode catalyst layers 52C and 52A and the first gasket layers 54C and 54A to the polymer electrolyte membrane 51.

According to such a production method, the electrode catalyst layers 52C and 52A are formed on the upper surfaces of the support base materials 60C and 60A, respectively, on which the first gasket layers 54C and 54A are disposed. Thus, in forming the electrode catalyst layers 52C and 52A, the sizes of the inner perimeters of the first gasket layers 54C and 54A are brought into conformity with those of the outer perimeters of the electrode catalyst layers 52C and 52A, respectively. Then, the electrode catalyst layer 52C and the first gasket layer 54C are simultaneously transferred to the cathode contact surface 51a of the polymer electrolyte membrane 51, and the electrode catalyst layer 52A and the first gasket layer 54A are simultaneously transferred to the anode contact surface 51b of the polymer electrolyte membrane 51. Thus, a gap is prevented from being formed between the electrode catalyst layer 52C and the first gasket layer 54C or between the electrode catalyst layer 52A and the first gasket layer 54A. As a result, the polymer electrolyte membrane 51 is prevented from being exposed from between the electrode catalyst layer 52C or 52A and the first gasket layer 54C or 54A, respectively.

The first gasket layers 54C and 54A are used as masks in forming the electrode catalyst layers 52C and 52A, respectively, thereby reducing the number of members needed to form the electrode catalyst layers 52C and 52A.

Moreover, after transferring the electrode catalyst layers 52C and 52A and the first gasket layers 54C and 54A, the second bonding layers 58C and 58A are exposed on the respective multi-layers formed of the polymer electrolyte membrane 51, the electrode catalyst layers 52C and 52A, and the first gasket layers 54C and 54A. This facilitates the assemblage of the porous diffusion layers 53C and 53A with the second gasket layers 55C and 55A, respectively, and after being assembled, these members are firmly fixed to the respective multi-layers.

When viewed from the perpendicular direction, the electrode catalyst layer 52C and 52A do not overlap with the first gasket layer 54C and 54A, or the second gasket layer 55C and 55A, respectively. Thus, gas diffusion is prevented to thereby minimize production of portions not contributing to generation of electric power in the electrode catalyst layers 52C and 52A. Further, when viewed from the perpendicular direction, the membrane electrode assembly will not have thickness variation which would otherwise have been caused by the presence of the portions with or without the overlap between the electrode catalyst layer and the gasket layer.

In the second embodiment, the first gasket layers 54C and 54A are examples of transfer members.

As described above, according to the method for producing a membrane electrode assembly, and the membrane electrode assembly of the second embodiment, the advantageous effects enumerated below can be obtained.

(5) In forming the electrode catalyst layers 52C and 52A, the sizes of the inner perimeters of the first gasket layers 54C and 54A are brought into conformity with those of the outer perimeters of the electrode catalyst layers 52C and 52A, respectively, and the electrode catalyst layers 52C and 52A and the first gasket layers 54C and 54A are simultaneously transferred to the contact surfaces 51a and 51b, respectively, of the polymer electrolyte membrane 51. Accordingly, the polymer electrolyte membrane 51 is prevented from being exposed from a gap that could be formed between the electrode catalyst layer 52C or 52A and the first gasket layer 54C or 54A.
(6) The first gasket layers 54C and 54A are configured of the respective first bonding layers 56C and 56A, the respective second bonding layers 58C and 58A, and the respective gasket base materials 57C and 57A sandwiched between the first bonding layer 56C or 56A and the second bonding layer 58C or 58A. With this configuration, the first gasket layers 54C and 54A are each bonded to the members sandwiching the first gasket layer 54C or 54A through the bonding layers, thereby enhancing adhesion of the first gasket layers 54C and 54A to the members.
(7) Since the second bonding layers 58C and 58A have a greater adhesive strength to the gasket base materials 57C and 57A than to the support base materials 60C and 60A, the support base materials 60C and 60A can be easily peeled off from the first gasket layers 54C and 54A, respectively.
(8) The porous diffusion layers 53C and 53A are compression bonded to the electrode catalyst layers 52C and 52A, respectively, and bonded to the respective second bonding layers 58C and 58A of the first gasket layers 54C and 54A. Thus, the second bonding layers 58C and 58A, which are disposed on the contact surfaces 51a and 51b, respectively, of the polymer electrolyte membrane 51 together with the electrode catalyst layers 52C and 52A as the first gasket layers 54C and 54A, are used for fixing the porous diffusion layers 53C and 53A. Accordingly, the porous diffusion layers 53C and 53A can be held on the respective multi-layers including the polymer electrolyte membrane 51, the respective electrode catalyst layers 52C and 52A, and the respective first gasket layers 54C and 54A, without separately forming respective bonding layers.
(9) In the porous diffusion layers 53C and 53A, parts of the respective large width portions 53Cb and 53Ab protruding from the small width portions 53Ca and 53Aa in the direction parallel to the contact surfaces 51a and 51b are bonded to the second bonding layers 58C and 58A, respectively, configuring the first gasket layers 54C and 54A. Thus, using the production method described above, the membrane electrode assembly 50 including the porous diffusion layers 53C and 53A is produced. Accordingly, in the membrane electrode assembly 50 formed in this way, the polymer electrolyte membrane 51 is prevented from being exposed from a gap that could be formed between the electrode catalyst layer 52C or 52A and the first gasket layer 54C or 54A.
(10) Due to the application of pressure in the transfer of the electrode catalyst layers 52C and 52A and the first gasket layers 54C and 54A, the inner perimeters of the first bonding layers 56C and 56A partially extrude into the outer perimeters of the electrode catalyst layers 52C and 52A, respectively. Thus, a gap is appropriately prevented from being formed between the electrode catalyst layer 52C or 52A and the first gasket layer 54C or 54A, respectively.

### (Third Embodiment)

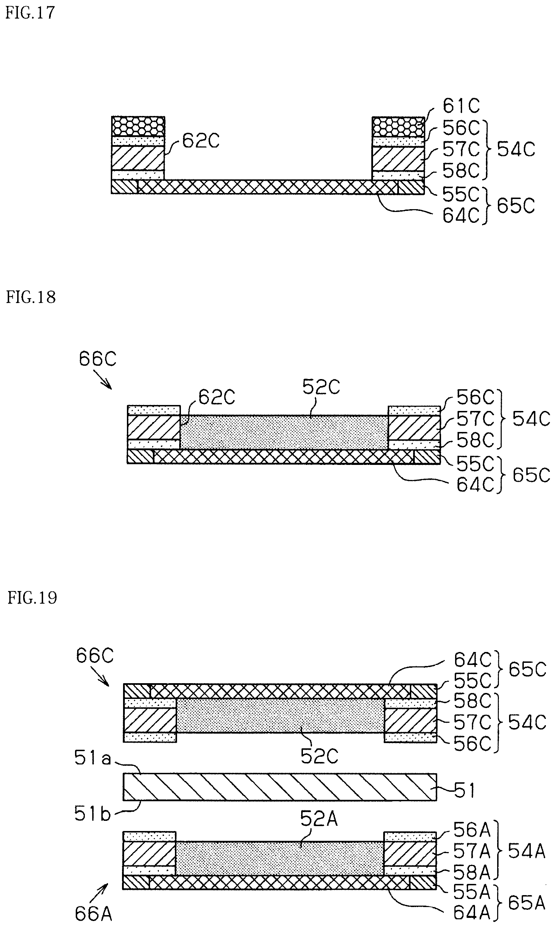

Referring to Figs. 17 to 20, a third embodiment will be described. The third embodiment relates to a membrane electrode assembly and a method for producing a membrane electrode assembly. A membrane electrode assembly according to the third embodiment has a configuration similar to that of the second embodiment, but its production method is different from that of the second embodiment. The following description sets forth the method for producing a membrane electrode assembly, focusing on differences. Components similar to those of the second embodiment are designated with the same reference signs to omit description.

### [Method for producing Membrane Electrode Assembly]

As shown in Fig. 17, the second gasket layer 55C serving as a part of a support base material is assembled to a porous sheet 64C made of a material used as the porous diffusion layer 53C, so as to be located outside the outer perimeter of the porous sheet 64C to thereby form a support base material 65C. The porous sheet 64C is an example of a porous body. In a first step, the first gasket layer 54C is disposed on the upper surface of the support base material 65C. The upper surface of the first gasket layer 54C is covered with the protective sheet 61C. In the first gasket layer 54C, the second bonding layer 58C is in contact with the support base material 65C, and the first bonding layer 56C is in contact with the protective sheet 61C.

In the planar direction that is a direction parallel to the upper surface of the support base material 65C, the inner perimeter of the laminate configured of the first gasket layer 54C and the protective sheet 61C define the opening 62C having a shape corresponding to the outer shape of the electrode catalyst layer 52C.

Materials that can be used for the porous sheet 64C are similar to those which can be used for the porous diffusion layer 53C of the second embodiment. The second gasket layer 55C and the first gasket layer 54C have configurations similar to those of the second embodiment. However, the adhesive strength of the second bonding layer 58C to the support base material 65C may be greater than, or may be smaller than, or may be approximately equal to the adhesive strength thereof to the gasket base material 57C.

As shown in Fig. 18, in a second step, a catalyst ink is coated to the inside of the opening 62C, followed by drying, thereby forming the electrode catalyst layer 52C on a portion of the upper surface of the support base material 65C, exposed from the first gasket layer 54C. After forming the electrode catalyst layer 52C, the protective sheet 61C is peeled off. The support base material 65C, the first gasket layer 54C, and the electrode catalyst layer 52C configure a layered body 66C.

As the composition of the catalyst ink and the coating method, those which are mentioned in the first embodiment are used.

As shown in Fig. 19, similarly to the electrode catalyst layer 52C, the electrode catalyst layer 52A is also formed by disposing the first gasket layer 54A on the support base material 65A, followed by coating and drying a catalyst ink. The support base material 65A is configured of a porous sheet 64A made of a material used as the porous diffusion layer 53A, and the second gasket layer 55A assembled to the porous sheet 64A. The support base material 65A, the first gasket layer 54A, and the electrode catalyst layer 52A configure a layered body 66A.

The layered bodies 66C and 66A are disposed sandwiching the polymer electrolyte membrane 51. In this case, the electrode catalyst layer 52C and the first bonding layer 56C face the cathode contact surface 51a of the polymer electrolyte membrane 51, and the electrode catalyst layer 52A and the first bonding layer 56A face the anode contact surface 51b of the polymer electrolyte membrane 51. In a third step, in a state where the polymer electrolyte membrane 51 is sandwiched between the two layered bodies 66C and 66A, the layered bodies 66C and 66A and the polymer electrolyte membrane 51 are heated and pressed. As materials for the polymer electrolyte membrane 51, those which are mentioned in the first embodiment are used.

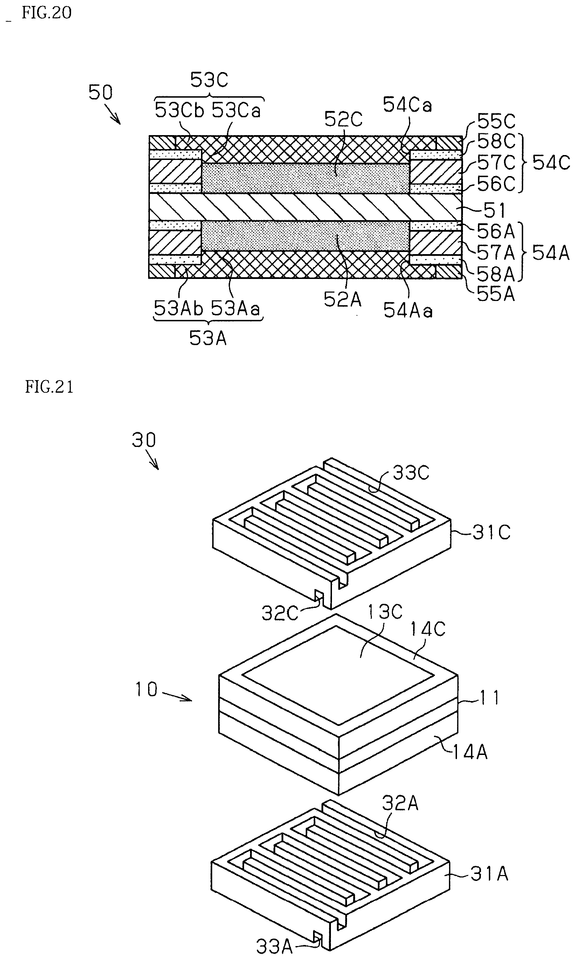

As shown in Fig. 20, as a result of the heating and pressing, the electrode catalyst layer 52C and the first gasket layer 54C are compression bonded to the cathode contact surface 51a of the polymer electrolyte membrane 51, and the electrode catalyst layer 52A and the first gasket layer 54A are compression bonded to the anode contact surface 51b of the polymer electrolyte membrane 51.

By applying pressure, a portion of the porous sheet 64C is pressed into the opening 54Ca defined by the inner perimeter of the first gasket layer 54C, and a portion of the porous sheet 64A is also pressed into the opening 54Aa defined by the inner perimeter of the first gasket layer 54A. Thus, the porous diffusion layers 53C and 53A are formed. The portions pressed into the openings 54Ca and 54Aa defined by the inner perimeters of the first gasket layers 54C and 54A, respectively, serve as the small width portions 53Ca and 53Aa. By applying pressure, the inner perimeters of the first bonding layers 56C and 56A partially extrude into the outer perimeters of the electrode catalyst layers 52C and 52A, respectively, contacting the respective first bonding layers 56C and 56A. Thus, the membrane electrode assembly 50 is formed. It should be noted that, Figs. 19 and 20 illustrate the process of forming the small width portions 53Ca and 53Aa of the respective porous diffusion layers 53C and 53A in an exaggerated manner.

In the steps described above, the electrode catalyst layer 52C, the first gasket layer 54C, the porous diffusion layer 53C, and the second gasket layer 55C are arranged on the cathode contact surface 51a of the polymer electrolyte membrane 51 at the same time with the arrangement of the electrode catalyst layer 52A, the first gasket layer 54A, the porous diffusion layer 53A, and the second gasket layer 55A on the anode contact surface 51b of the polymer electrolyte membrane 51. Alternatively, the arrangement of the members on the cathode contact surface 51a may be separately performed from the arrangement of the members on the anode contact surface 51b.

### [Advantageous Effects]

The advantageous effects of the foregoing method for producing the membrane electrode assembly 50 will be described.

Similarly to the second embodiment, in the foregoing production method as well, the electrode catalyst layers 52C and 52A are formed on the upper surfaces of the support base materials 65C and 65A, respectively, on which the respective first gasket layers 54C and 54A are disposed. Thus, in forming the electrode catalyst layers 52C and 52A, the sizes of the inner perimeters of the respective first gasket layers 54C and 54A are brought into conformity with those of the outer perimeters of the respective electrode catalyst layers 52C and 52A. The electrode catalyst layer 52C and the first gasket layer 54C are simultaneously disposed on the cathode contact surface 51a of the polymer electrolyte membrane 51, and the electrode catalyst layer 52A and the first gasket layer 54A are simultaneously disposed on the anode contact surface 51b of the polymer electrolyte membrane 51. Accordingly, a gap is prevented from being formed between the electrode catalyst layer 52C and the first gasket layer 54C or between the electrode catalyst layer 52A and the first gasket layer 54A. As a result, the polymer electrolyte membrane 51 is prevented from being exposed from between the electrode catalyst layer 52C or 52A and the first gasket layer 54C or 54A.

Moreover, in the third embodiment, the support base materials 65C and 65A are used as the porous diffusion layers 53C and 53A and the second gasket layers 55C and 55A, respectively. Further, the electrode catalyst layer 52C, the first gasket layer 54C, the porous diffusion layer 53C, and the second gasket layer 55C are simultaneously disposed on the cathode contact surface 51a of the polymer electrolyte membrane 51. Also, the electrode catalyst layer 52A, the first gasket layer 54A, the porous diffusion layer 53A, and the second gasket layer 55A are simultaneously disposed on the anode contact surface 51b of the polymer electrolyte membrane 51. Accordingly, as in the second embodiment, the number of members needed to form the membrane electrode assembly 50 can be reduced and the number of fabrication steps of the membrane electrode assembly 50 can be reduced, compared with a production method in which a support base material is peeled off after transfer of a gasket layer and an electrode catalyst layer from the support base material to a polymer electrolyte membrane, and then a porous diffusion layer is separately disposed.

In the third embodiment, the first gasket layers 54C and 54A are examples of transfer members.

As described above, according to the method for producing a membrane electrode assembly, and the membrane electrode assembly of the third embodiment, the advantageous effects below can be obtained in addition to the advantageous effects (5), (6), (9), and (10) of the second embodiment.

(11) The support base materials 65C and 65A are used as the porous diffusion layers 53C and 53A and the second gasket layers 55C and 55A, respectively, reducing the number of members needed to form the membrane electrode assembly 50, and also reducing the number of fabrication steps of the membrane electrode assembly 50.

### (Modifications)

The second and third embodiments can be modified for implementation as below.

The first gasket layers 54C and 54A may each be configured of only one or more bonding layers, without using the gasket base materials 57C and 57A. With this configuration, the number of members needed for the membrane electrode assembly 50 is reduced. When the first gasket layers 54C and 54A are each configured of only bonding layers, and when the layered bodies 63C and 63A are pressed against the polymer electrolyte membrane 51 using the production method of the second embodiment, the bonding layers are sandwiched between the polymer electrolyte membrane 51 and the support base material 60C or 60A, and brought into contact with them. In this case, the bonding layers preferably have a greater adhesive strength to the polymer electrolyte membrane 51 than to the support base materials 60C and 60A. With this configuration, the support base materials 60C and 60A can be easily peeled off. Further, in disposing the porous diffusion layers 53C and 53A, the small width portions 53Ca and 53Aa thereof are compression bonded to the respective electrode catalyst layers 52C and 52A, and the large width portions 53Cb and 53Ab thereof are bonded to the above respective bonding layers as the first gasket layers 54C and 54A.

When the thickness of the electrode catalyst layer 52C or 52A is greater than that of the first bonding layer 56C or 56A and the gasket base material 57C or 57A, respectively, and the electrode catalyst layers 52C and 52A are in contact with the second bonding layers 58C and 58A, respectively, the inner perimeters of the second bonding layers 58C and 58A may partially extrude into the outer perimeters of the electrode catalyst layer 52C in contact with the second bonding layers 58C and 58A. Such a structure is also formed by simultaneously pressing the electrode catalyst layers 52C and 52A and the first gasket layers 54C and 54A against the polymer electrolyte membrane 51.

When viewed from the perpendicular direction, the shapes of the electrode catalyst layers 52C and 52A, the shapes of the first gasket layers 54C and 54A, the shapes of the porous diffusion layers 53C and 53A, and the shapes of the second gasket layers 55C and 55A may be in a triangular shape, or in a polygonal shape having five or more corners, or in a circular shape, or in an elliptic shape. The inner perimeters of the first gasket layers 54C and 54A may be tilted relative to the perpendicular direction. For example, the inner perimeters of the first gasket layer 54C may form an inverse taper when viewed from the support base material 60C side, such that the cross-sectional area of the opening 62C of the layered body 63C becomes smaller toward the support base material 60C. In other words, the inner surface of the layered body 63C defining the opening 62C forms a truncated pyramid shape, and the electrode catalyst layer 52C is filled in the opening 62C in such a shape to cover the bottom part thereof. In this case, in the membrane electrode assembly 50, the inner perimeter of the first gasket layer 54C forms a taper when viewed from the polymer electrolyte membrane 51 side. According to such a production method, the electrode catalyst layers 52C and 52A and the first gasket layers 54C and 54A can also be formed into a shape that is difficult to be formed by a conventional production method of disposing the electrode catalyst layers 52C and 52A separately from the first gasket layers 54C and 54A on a surface of the polymer electrolyte membrane 51.

With the use of the production methods according to the second and third embodiments, if the produced membrane electrode assembly has a configuration different from that of the membrane electrode assembly 50 described in the second embodiment, the advantageous effects (5) are obtained. For example, the porous diffusion layers 53C and 53A may have a substantially constant width in the planar direction, without distinguishing the small width portions 53Ca and 53Aa from the large width portions 53Cb and 53Ab. In this case, when viewed from the perpendicular direction, the overall sizes of the openings defined by the inner perimeters of the respective first gasket layers 54C and 54A are substantially in conformity with those of the openings defined by the inner perimeters of the second gasket layers 55C and 55A. Thus, the overall sizes of the electrode catalyst layers 52C and 52A are substantially in conformity with those of the porous diffusion layers 53C and 53A, respectively.

### (Fourth Embodiment)

Referring to Fig. 21, a fourth embodiment will be described. The fourth embodiment relates to a polymer electrolyte fuel cell.

### [Configuration of Polymer Electrolyte Fuel Cell]

As shown in Fig. 21, a polymer electrolyte fuel cell 30 includes any of the membrane electrode assemblies of the first to third embodiments and a pair of separators 31C and 31A. Fig. 21 shows, as an example, a configuration in which the polymer electrolyte fuel cell 30 includes the membrane electrode assembly 10 of the first embodiment.

The membrane electrode assembly 10 is sandwiched between the separators 31C and 31A. The separator 31C has a surface facing the membrane electrode assembly 10, in which a gas passage 32C is recessed. The separator 31C has the other surface not facing the membrane electrode assembly 10, in which a cooling water passage 33C is recessed. The separator 31A has a surface facing the membrane electrode assembly 10, in which a gas passage 32A is recessed. The separator 31A has the other surface not facing the membrane electrode assembly 10, in which a cooling water passage 33A is recessed.

The membrane electrode assembly 10 are assembled with the separators 31C and 31A and further provided with supply mechanisms for an oxidizer gas and a fuel gas, and the like, thereby fabricating a single-cell polymer electrolyte fuel cell 30. The polymer electrolyte fuel cell 30 is used in a state of a single cell, or in a state where a plurality of the polymer electrolyte fuel cells 30 are combined.

In the use of the polymer electrolyte fuel cell 30, an oxidizer gas is passed through the gas passage 32C of the cathode-side separator 31C, and a fuel gas is passed through the anode-side gas passage 32A of the separator 31A. Further, cooling water is passed through the cooling water passages 33C and 33A of the respective separators 31C and 31A. A gas supply from the gas passage 32C to the cathode, and a gas supply from the gas passage 32A to the anode promote electrode reactions accompanied by proton conduction in the polymer electrolyte membrane 11, generating an electromotive force across the cathode and the anode.

### (Examples)

Specific examples of the foregoing membrane electrode assemblies will be described.

### <Example 1>

Example 1 relates to the membrane electrode assembly of the first embodiment.

### [Preparation of Catalyst Ink]

A carbon supporting platinum catalyst, perfluoro carbon sulfonic acid (for which NAFION (registered trademark) solution manufactured by E. I. du Pont de Nemours and Company was used), and amorphous carbon introduced with a sulfonic group, were mixed in a solvent (mixed solvent in which water, 1-propanol, and 2-propanol were mixed at a ratio of 1:1:1 (volume ratio)). The mixture was dispersed using a planetary ball mill (Pulverisette 7 manufactured by FRITSCH GmbH was used. The pot and ball of the ball mill used were made of zirconia), thereby preparing a catalyst ink. The solid content of the catalyst ink was 10 mass%.

### [Forming Process]

A laminate of a gasket layer attached with a protective sheet and a transfer bonding layer was bonded to a support base material. The laminate of the protective sheet, the gasket layer, and the transfer bonding layer had a square opening of 5 cm². Then, the catalyst ink was coated onto the support base material through the opening by doctor blading, followed by drying in an atmosphere of 80°C for 5 minutes, thereby forming an electrode catalyst layer. Thus, a layered body was obtained. In this case, the thickness of the electrode catalyst layer was adjusted such that the amount of support of the catalyst material was 0.4 mg/cm².

### [Bonding Process]

As the polymer electrolyte membrane, NAFION (registered trademark) 212 (manufactured by E. I. du Pont de Nemours and Company) was used. Two layered bodies and the polymer electrolyte membrane were disposed such that one of the two layered bodies faced one of the two contact surfaces of the polymer electrolyte membrane, and the other of the two layered bodies faced the other of the two contact surfaces of the polymer electrolyte membrane. After that, the polymer electrolyte membrane sandwiched between the two layered bodies was subjected to hot pressing in which the polymer electrolyte membrane was heated at 130°C and held for 10 minutes under the application of pressure, thereby transferring the electrode catalyst layer and the gasket layer to the polymer electrolyte membrane.

Further, as the porous diffusion layer, carbon cloth formed with a filling layer was used. Two porous diffusion layers were disposed sandwiching the polymer electrolyte membrane to which the electrode catalyst layer and the gasket layer had been transferred, thereby obtaining a membrane electrode structure of example 1.

### <Example 2>

Example 2 relates the membrane electrode assembly of the second embodiment.

### [Preparation of a Catalyst Ink]

A carbon supporting platinum catalyst, perfluoro carbon sulfonic acid (for which NAFION (registered trademark) solution manufactured by E. I. du Pont de Nemours and Company was used), and amorphous carbon introduced with a sulfonic group, were mixed in a solvent (mixed solvent in which water, 1-propanol, and 2-propanol were mixed at a ratio of 1:1:1 (volume ratio)). The mixture was dispersed using a planetary ball mill (Pulverisette 7 manufactured by FRITSCH GmbH was used. The pot and ball of the ball mill used were made of zirconia), thereby preparing a catalyst ink. The solid content of the catalyst ink was 10 mass%.

### [Forming Process]

A first gasket layer attached with a protective sheet was bonded to a support base material made of a fluorine resin. The laminate of the protective sheet and the first gasket layer had a square opening of 5 cm². Then, the catalyst ink was coated onto the support base material through the opening by doctor blading, followed by drying in an atmosphere of 80°C for 5 minutes, thereby forming an electrode catalyst layer. Thus, a layered body was obtained. In this case, the thickness of the electrode catalyst layer was adjusted such that the amount of support of the catalyst material was 0.4 mg/cm².

### [Bonding Process]

As the polymer electrolyte membrane, NAFION (registered trademark) 212 (manufactured by E. I. du Pont de Nemours and Company) was used. Two layered bodies and the polymer electrolyte membrane were disposed such that one of the two layered bodies faced one of the two contact surfaces of the polymer electrolyte membrane, and the other of the two layered bodies faced the other of the two contact surfaces of the polymer electrolyte membrane. After that, the polymer electrolyte membrane sandwiched between the two layered bodies was subjected to hot pressing in which the polymer electrolyte membrane was heated at 130°C and held for 10 minutes under the application of pressure, thereby transferring the electrode catalyst layer and the first gasket layer to the polymer electrolyte membrane.

Further, as the porous diffusion layer, carbon cloth formed with a filling layer was used. Two porous diffusion layers and two second gasket layers were disposed sandwiching the polymer electrolyte membrane to which the electrode catalyst layer and the first gasket layer had been transferred, thereby obtaining a membrane electrode structure of example 2.

### [Reference Signs List]

- 10: Membrane electrode assembly
- 11: Polymer electrolyte membrane
- 11a: Cathode contact surface
- 11b: Anode contact surface
- 12C, 12A: Electrode catalyst layer
- 13C, 13A: Porous diffusion layer
- 14C, 14A: Gasket layer
- 15C, 15A: Gasket bonding layer
- 16C, 16A: Gasket base material
- 20C, 20A: Support base material
- 21C, 21A: Transfer bonding layer
- 24C, 24A: Layered body
- 30: Polymer electrolyte fuel cell
- 31C, 31A: Separator
- 50: Membrane electrode assembly
- 51: Polymer electrolyte membrane
- 51a: Cathode contact surface
- 51b: Anode contact surface
- 52C, 52A: Electrode catalyst layer
- 53C and 53A: Porous diffusion layer
- 53Ca, 53Aa: Small width portion
- 53Cb, 53Ab: Large width portion
- 54C, 54A: First gasket layer
- 55C, 55A: Second gasket layer
- 56C, 56A: First bonding layer
- 57C, 57A: Gasket base material
- 58C, 58A: Second bonding layer
- 60C, 60A, 65C, 65A: Support base material
- 63C, 63A, 66C, 66A: Layered body
- 64C, 64A: Porous sheet

## Claims

1. A method for producing a membrane electrode assembly comprising:
a first step of disposing a transfer member including a gasket layer on an upper surface of a support base material;
a second step of forming an electrode catalyst layer by coating an ink onto a portion of the upper surface of the support base material, the portion being exposed from the transfer member, to form a layered body including the support base material, the transfer member, and the electrode catalyst layer; and
a third step of pressing the layered body against a polymer electrolyte membrane having a contact surface to compression bond the gasket layer and the electrode catalyst layer to the contact surface.

2. The method for producing a membrane electrode assembly according to claim 1, wherein:
the transfer member includes the gasket layer and a transfer bonding layer;
in the first step, the transfer member is disposed so that the transfer bonding layer is located between the upper surface of the support base material and the gasket layer; and
the method further includes a fourth step of peeling off the support base material and the transfer bonding layer from the gasket layer and the electrode catalyst layer compression bonded to the contact surface.

3. The method for producing a membrane electrode assembly according to claim 2, wherein:
the gasket layer includes a gasket base material and a gasket bonding layer; and
the gasket base material is sandwiched between the transfer bonding layer and the gasket bonding layer.

4. The method for producing a membrane electrode assembly according to claim 3, wherein:
the transfer bonding layer has a greater adhesive strength to the support base material than to the gasket base material.

5. The method for producing a membrane electrode assembly according to claim 1, wherein:
the transfer member is the gasket layer;
the gasket layer is a multi-layer disposed parallel to the upper surface of the support base material; and
the multi-layer includes a first bonding layer for bonding the contact surface to the gasket layer, a second bonding layer for bonding the upper surface of the support base material to the gasket layer, and a gasket base material sandwiched between the first bonding layer and the second bonding layer and in contact with the first bonding layer and the second bonding layer.

6. The method for producing a membrane electrode assembly according to claim 5, further comprising:
a fourth step of peeling off the support base material from the gasket layer and the electrode catalyst layer compression bonded to the contact surface, wherein:
the second bonding layer has a greater adhesive strength to the gasket base material than to the support base material.

7. The method for producing a membrane electrode assembly according to claim 6, further comprising:
a fifth step of disposing a porous diffusion layer after peeling off of the support base material, wherein:
in the fifth step, the porous diffusion layer is compression bonded to the electrode catalyst layer and bonded to the second bonding layer of the gasket layer.

8. The method for producing a membrane electrode assembly according to claim 1, wherein:
the transfer member is the gasket layer; and
the gasket layer includes a bonding layer that is bonded to the contact surface and the upper surface of the support base material when the layered body is pressed against the polymer electrolyte membrane.

9. The method for producing a membrane electrode assembly according to claim 8, further comprising:
a fourth step of peeling off the support base material from the gasket layer and the electrode catalyst layer compression bonded to the contact surface, wherein:
the bonding layer as the gasket layer has a greater adhesive strength to the polymer electrolyte membrane than to the support base material.

10. The method for producing a membrane electrode assembly according to claim 9, further comprising:
a fifth step of disposing a porous diffusion layer after peeling off of the support base material, wherein:
in the step of disposing the porous diffusion layer, the porous diffusion layer is compression bonded to the electrode catalyst layer and bonded to the bonding layer as the gasket layer.

11. The method for producing a membrane electrode assembly according to any one of claims 1, 5, and 8, wherein:
the support base material includes a porous body; and
in the third step, the layered body is pressed against the polymer electrolyte membrane to form a porous diffusion layer from the porous body.

12. A membrane electrode assembly comprising:
a polymer electrolyte membrane having a contact surface;
an electrode catalyst layer located on the contact surface; and
a gasket layer located on the contact surface so as to surround the electrode catalyst layer, wherein:
the gasket layer includes a bonding layer; and
the bonding layer has an inner perimeter partially extruding into an outer perimeter of the electrode catalyst layer.

13. The membrane electrode assembly according to claim 12, wherein:
the gasket layer includes a gasket base material and a gasket bonding layer as the bonding layer; and
the gasket bonding layer is sandwiched between the gasket base material and the polymer electrolyte membrane.

14. The membrane electrode assembly according to claim 13, further comprising:
a porous diffusion layer, wherein:
the electrode catalyst layer is located between the polymer electrolyte membrane and the porous diffusion layer; and
the gasket layer is located on the contact surface so as to surround the electrode catalyst layer and the porous diffusion layer.

15. The membrane electrode assembly according to claim 12, wherein:
the gasket layer is a first gasket layer;
the membrane electrode assembly further comprises:
a porous diffusion layer including a small width portion in surface contact with the electrode catalyst layer, and a large width portion having a width greater than a width of the small width portion in a direction parallel to the contact surface, with the small width portion being located between the electrode catalyst layer and the large width portion; and
a second gasket layer located around the large width portion of the porous diffusion layer when viewed from a direction perpendicular to the contact surface, wherein the first gasket layer is located between the second gasket layer and the polymer electrolyte membrane;
the first gasket layer is located around the electrode catalyst layer and the small width portion of the porous diffusion layer when viewed from a direction perpendicular to the contact surface;
the first gasket layer is formed of a first bonding layer that is the bonding layer, a second bonding layer, and a gasket base material sandwiched between the first bonding layer and the second bonding layer;
the first bonding layer is bonded to the contact surface; and
a part of the large width portion of the porous diffusion layer is bonded to the second bonding layer, the part protruding from the small width portion in a direction parallel to the contact surface.

16. A polymer electrolyte fuel cell comprising:
the membrane electrode assembly according to any one of claims 12 to 15; and
a pair of separators sandwiching the membrane electrode assembly.
